# EUROPEAN PATENT APPLICATION

(11) **EP 4 773 638 A1**
(43) Date of publication of application: **08.07.2026**
(21) Application number: 24894371.4
(22) Date of filing: 08.10.2024
(51) Int. Cl.: H04W 4/80, H04W 4/06, H04M 1/72412, H04M 1/60, G06F 3/16, H04R 3/12

(54) **ELECTRONIC DEVICE AND METHOD FOR TRANSMITTING PACKETS FOR OUTPUTTING AUDIO, AND NON-TRANSITORY COMPUTER-READABLE RECORDING MEDIUM**

(30) Priority: 20.11.2023 KR 20230161674; 07.12.2023 KR 20230177141
(71) Applicant: Samsung Electronics Co., Ltd., Suwon-si, Gyeonggi-do 16677 (KR)
(72) Inventor: CHEONG, Gupil, Suwon-si Gyeonggi-do 16677 (KR); KANG, Doosuk, Suwon-si Gyeonggi-do 16677 (KR); YOON, Heejae, Suwon-si Gyeonggi-do 16677 (KR); GI, Hyenho, Suwon-si Gyeonggi-do 16677 (KR); JIN, Juyeon, Suwon-si Gyeonggi-do 16677 (KR)
(74) Representative: Appleyard Lees IP LLP
(86) International application number: PCT/KR2024/015313
(87) International publication number: WO 2025/110475

(57) **Abstract**

An electronic device is disclosed. The electronic device can: select an object from among one or more objects included in an input image; identify indication information about a state change of the selected object; and obtain, on the basis of the indication information, a prompt related to the input image. The prompt can include one or more words for changing the state of the selected object included in the input image. The state can be included in different states of the selected object. The electronic device inputs the input image and the prompt into a generative artificial intelligence model, and thus can generate one or more result images in which the state of the selected object has been changed.

## Description

### [Technical Field]

The following descriptions relate to an electronic device, a method, and a non-transitory computer readable storage medium transmitting a packet for outputting audio.

### [Background Art]

Bluetooth^{®} low energy (BLE) may provide reduced power consumption and may provide a wide communication range between devices, compared to legacy Bluetooth^{®} (or classic Bluetooth). The BLE may be provided on an industrial, scientific, and medical (ISM) radio band.

### [Disclosure]

### [Technical Solution]

An electronic device is disclosed. The electronic device may comprise communication circuitry for Bluetooth low energy (BLE). The electronic device may comprise a processor. The electronic device may comprise memory storing instructions. The instructions, when executed the processor, may cause the electronic device to generate a plurality of connected isochronous groups (CIGs) for an external electronic device through the communication circuitry. The plurality of CIGs may be generated by different transmission parameters for transmitting packets for outputting audio to the external electronic device. The instructions, when executed the processor, may cause the electronic device to transmit the packets for outputting the audio to the external electronic device through the plurality of CIGs.

An electronic device is disclosed. The electronic device may comprise communication circuitry for BLE. The electronic device may comprise a processor. The electronic device may comprise memory storing instructions. The instructions, when executed the processor, may cause the electronic device to generate a first CIG event and a second CIG event to be used to output audio using an external electronic device. The instructions, when executed the processor, may cause the electronic device to transmit a first packet according to a first transmission parameter, which is set for the first CIG event using the communication circuitry, to the external electronic device through a CIS event in the first CIG event. The instructions, when executed the processor, may cause the electronic device to transmit a second packet according to a second transmission parameter, which is set for the second CIG event using the communication circuitry, different from the first transmission parameter, to the external electronic device through a CIS event in the second CIG event.

An electronic device is disclosed. The electronic device may comprise communication circuitry for BLE. The electronic device may comprise a processor. The electronic device may comprise memory storing instructions. The instructions, when executed the processor, may cause the electronic device to generate a CIG event to be used to output audio using an operating external electronic device. The instructions, when executed the processor, may cause the electronic device to transmit a first packet according to a first transmission parameter, which is set for a first CIS event in the CIG event using the communication circuitry, to the external electronic device through the first CIS event. The instructions, when executed the processor, may cause the electronic device to transmit a second packet according to a second transmission parameter, which is set for a second CIS event in the CIG event using the communication circuitry, different from the first transmission parameter, to the external electronic device through the second CIS event.

An electronic device is disclosed. The external electronic device may comprise a speaker. The external electronic device may comprise communication circuitry for BLE. The external electronic device may comprise a processor. The external electronic device may comprise memory storing instructions. The instructions, when executed the processor, may cause the electronic device to receive a first packet according to a first transmission parameter, which is set for a first CIG event using the communication circuitry, from an external electronic device through a CIS event in the first CIG event. The instructions, when executed the processor, may cause the electronic device to receive a second packet according to a second transmission parameter, which is set for a second CIG event using the communication circuitry, different from the first transmission parameter, from the external electronic device through a CIS event in the second CIG event. The instructions, when executed the processor, may cause the electronic device to output the audio obtained using the first packet and the second packet through the speaker.

A method is disclosed. The method may be performed by an electronic device including communication circuitry for BLE. The method may comprise generating a plurality of connected isochronous groups (CIGs) for an external electronic device through the communication circuitry. The plurality of CIGs may be generated by different transmission parameters for transmitting packets for outputting audio to the external electronic device. The method may comprise transmitting the packets for outputting the audio to the external electronic device through the plurality of CIGs.

A method is disclosed. The method may be performed by an electronic device including communication circuitry for BLE. The method may comprise generating a first CIG event and a second CIG event to be used to output audio using an external electronic device. The method may comprise transmitting a first packet according to a first transmission parameter, which is set for the first CIG event using the communication circuitry, to the external electronic device through a CIS event in the first CIG event. The method may comprise transmitting a second packet according to a second transmission parameter, which is set for the second CIG event using the communication circuitry, different from the first transmission parameter, to the external electronic device through a CIS event in the second CIG event.

A method is disclosed. The method may be performed by an electronic device including communication circuitry for BLE. The method may comprise generating a CIG event to be used to output audio using an external electronic device. The method may comprise transmitting a first packet according to a first transmission parameter, which is set for a first CIS event in the CIG event using the communication circuitry, to the external electronic device through the first CIS event. The method may comprise transmitting a second packet according to a second transmission parameter, which is set for a second CIS event in the CIG event using the communication circuitry, different from the first transmission parameter, to the external electronic device through the second CIS event.

A method is disclosed. The method may be performed by an electronic device including communication circuitry for BLE. The method may comprise receiving a first packet according to a first transmission parameter, which is set for a first CIG event using the communication circuitry, from an external electronic device through a CIS event in the first CIG event. The method may comprise receiving a second packet according to a second transmission parameter, which is set for a second CIG event using the communication circuitry, different from the first transmission parameter, from the external electronic device through a CIS event in the second CIG event. The method may comprise outputting the audio obtained using the first packet and the second packet through the speaker.

A non-transitory computer readable storage medium is disclosed. The non-transitory computer readable storage medium may store a program including instructions. The instructions, when executed a processor of an electronic device including communication circuitry for BLE, may cause the electronic device to generate a plurality of CIGs for an external electronic device through the communication circuitry. The plurality of CIGs may be generated by different transmission parameters for transmitting packets for outputting audio to the external electronic device. The instructions, when executed the processor, may cause the electronic device to transmit the packets for outputting the audio to the external electronic device through the plurality of CIGs.

A non-transitory computer readable storage medium is disclosed. The non-transitory computer readable storage medium may store a program including instructions. The instructions, when executed a processor of an electronic device including communication circuitry for BLE, may cause the electronic device to generate a first CIG event and a second CIG event to be used to output audio using an external electronic device. The instructions, when executed the processor, may cause the electronic device to transmit a first packet according to a first transmission parameter, which is set for the first CIG event using the communication circuitry, to the external electronic device through a CIS event in the first CIG event. The instructions, when executed the processor, may cause the electronic device to transmit a second packet according to a second transmission parameter, which is set for the second CIG event using the communication circuitry, different from the first transmission parameter, to the external electronic device through a CIS event in the second CIG event.

A non-transitory computer readable storage medium is disclosed. The non-transitory computer readable storage medium may store a program including instructions. The instructions, when executed a processor of an electronic device including communication circuitry for BLE, may cause the electronic device to generate a CIG event to be used to output audio using an external electronic device. The instructions, when executed the processor, may cause the electronic device to transmit a first packet according to a first transmission parameter, which is set for a first CIS event in the CIG event using the communication circuitry, to the external electronic device through the first CIS event. The instructions, when executed the processor, may cause the electronic device to transmit a second packet according to a second transmission parameter, which is set for a second CIS event in the CIG event using the communication circuitry, different from the first transmission parameter, to the external electronic device through the second CIS event.

A non-transitory computer readable storage medium is disclosed. The non-transitory computer readable storage medium may store a program including instructions. The instructions, when executed a processor of an electronic device including communication circuitry for BLE, may cause the electronic device to receive a first packet according to a first transmission parameter, which is set for a first CIG event using the communication circuitry, from an external electronic device through a CIS event in the first CIG event. The instructions, when executed the processor, may cause the electronic device to receive a second packet according to a second transmission parameter, which is set for a second CIG event using the communication circuitry, different from the first transmission parameter, from the external electronic device through a CIS event in the second CIG event. The instructions, when executed the processor, may cause the electronic device to output the audio obtained using the first packet and the second packet through the speaker.

### [Description of the Drawings]

FIG. 1 is a block diagram of an electronic device in a network environment according to various embodiments.
FIG. 2 illustrates an example of a wireless environment including an electronic device and an external electronic device.
FIG. 3A is a simplified block diagram of an exemplary electronic device.
FIG. 3B is a simplified block diagram of an exemplary external electronic device.
FIG. 3C is a simplified block diagram of an exemplary external electronic device.
FIG. 4 is a flowchart illustrating an exemplary method executed in an electronic device to transmit a packet for outputting audio.
FIG. 5 is a diagram illustrating an example of CIG events.
FIG. 6A is a diagram representing an example of a signal flow for generating a CIG event including at least one CIS event.
FIG. 6B is a diagram illustrating an example of a signal flow for generating a plurality of CIS events.
FIG. 7 is a flowchart illustrating an exemplary method in which an electronic device uses information determined for a transmission of a packet for outputting audio.
FIG. 8 illustrates an exemplary method of generating service data units (SDUs) used to generate packets to be transmitted to an external electronic device.
FIG. 9 illustrates an exemplary method of storing SDUs in a buffer.
FIG. 10A is a diagram representing an example of data transmitted according to CIG events based on determined information.
FIG. 10B is a diagram representing an example of data transmitted according to CIG events based on determined information.
FIG. 11A illustrates an example of a wireless environment including an electronic device and an external electronic device.
FIG. 11B illustrates an example of a wireless environment including an electronic device and an external electronic device.
FIG. 11C illustrates an example of a wireless environment including an electronic device and an external electronic device.
FIG. 12A is a diagram representing an example of CIG events based on determined information.
FIG. 12B is a diagram representing an example of CIS events based on determined information.
FIG. 12C is a diagram representing an example of CIG events based on determined information.
FIG. 13A illustrates an exemplary signal flow for generating SDUs used to generate packets to be transmitted to an external electronic device.
FIG. 13B illustrates an exemplary signal flow for generating SDUs used to generate packets to be transmitted to an external electronic device.
FIG. 14A illustrates an example of a wireless environment including an electronic device and an external electronic device.
FIG. 14B illustrates an example of a wireless environment including an electronic device and an external electronic device.
FIG. 14C illustrates an example of a wireless environment including an electronic device and an external electronic device.
FIG. 15A illustrates an example of a wireless environment including an electronic device and an external electronic device.
FIG. 15B illustrates an example of a wireless environment including an electronic device and an external electronic device.
FIG. 15C illustrates an example of a wireless environment including an electronic device and an external electronic device.
FIG. 15D illustrates an example of a wireless environment including an electronic device and an external electronic device.

### [Mode for Invention]

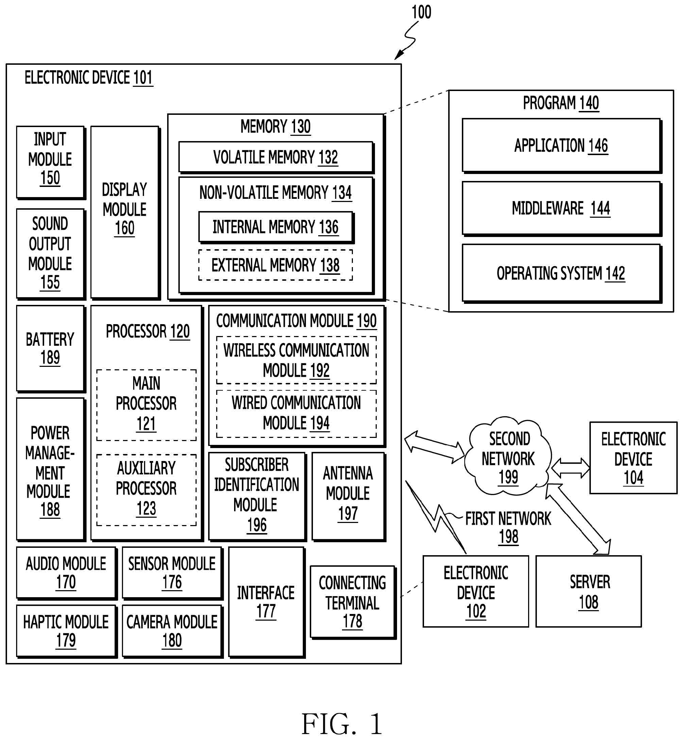

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

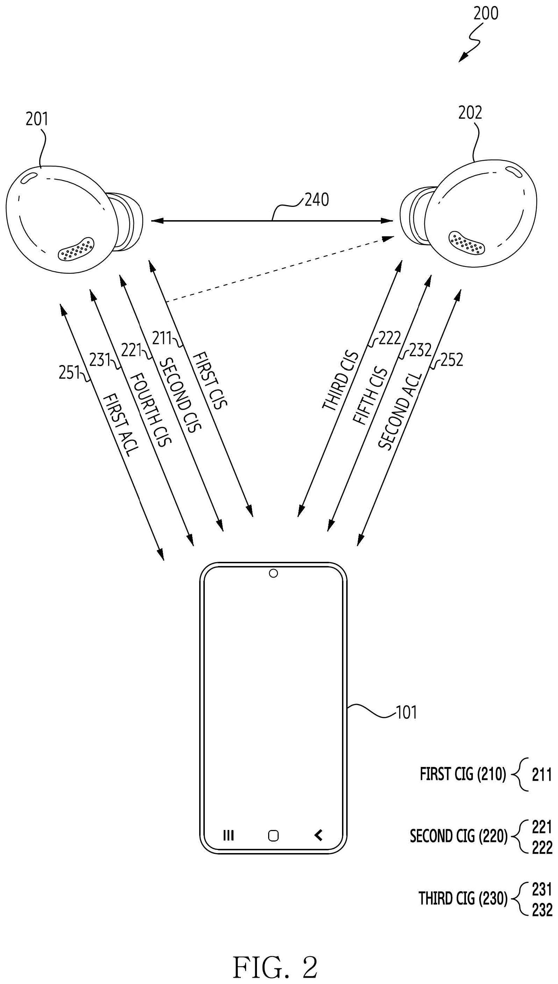

FIG. 2 illustrates an example of a wireless environment including an electronic device and an external electronic device.

Referring to FIG. 2, a wireless environment may include an electronic device 101, an external electronic device 201, and an external electronic device 202.

In an embodiment, the electronic device 101 in the wireless environment may be an audio source device such as a smartphone, a laptop computer, a desktop computer, or a tablet PC. For example, the electronic device 101 may transmit data on audio being played in the electronic device 101 to the external electronic device 201 and the external electronic device 202, respectively. For example, the data may be usable in the external electronic device 201 and the external electronic device 202 to output the audio from the external electronic device 201 and the external electronic device 202, respectively. In an embodiment, the electronic device 101 may be referred to as an audio streaming endpoint (ASE), a client device, a central device, a primary device, or a main device.

In an embodiment, the external electronic device 201 in the wireless environment may be audio sink devices such as earbuds or earphones. In an embodiment, the external electronic device 201 may receive data on audio from the electronic device 101 and output the audio through a speaker of the external electronic device 201 based on the data. In an embodiment, the external electronic device 201 may be referred to as a sink ASE, a server device, a peripheral device, a secondary device, or a sub device.

In an embodiment, the electronic device 101 may establish a first asynchronous connection-less (ACL) 251 with the external electronic device 201. For example, the first ACL 251 may be used to control an ASE caused between the electronic device 101 and the external electronic device 201.

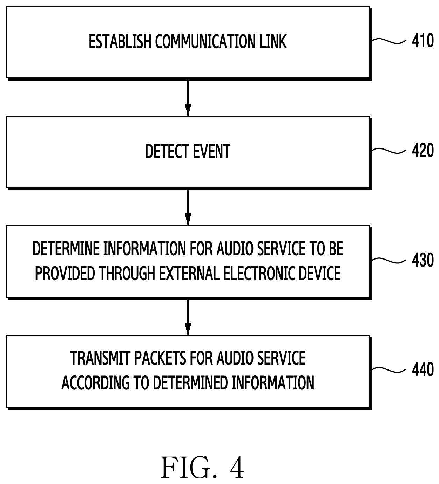

In an embodiment, the electronic device 101 may detect an event. For example, the event may include receiving a user request (e.g., a request for outputting audio using the external electronic device 201). In an embodiment, the detection of the event may be described in more detail below with reference to FIG. 4.

In an embodiment, the electronic device 101 may determine information for an audio service to be provided through the external electronic device 201 based on the event (or in response to the event). In an embodiment, the determination of the information for the audio service may be described in more detail below with reference to FIG. 4.

In an embodiment, the electronic device 101 may transmit packets for the audio service to the external electronic device 201 according to the information for the audio service. In an embodiment, the electronic device 101 may use a plurality of connected isochronous groups (CIGs) 210, 220, and 230 including connected isochronous streams (CISs) 211, 221, and 231 to transmit the packets for the audio service to the external electronic device 201. In an embodiment, the electronic device 101 may use the CISs 211, 221, and 231 of the plurality of CIGs 210, 220, and 230 to transmit the packets for the audio service to the external electronic device 201.

In an embodiment, in each of the plurality of CIGs 210, 220, and 230, a transmission parameter (or a quality of service (QoS)) may be set (or designated) (or determined) according to the information for the audio service. In an embodiment, in each of the plurality of CIGs 210, 220, and 230, the transmission parameter (or the QoS) may be set (or designated) (or determined) to include one or more CISs for transmitting the packets for the audio service to the external electronic device 201.

For example, each of the plurality of CIGs 210, 220, and 230 may be generated to transmit the packets for the audio service having a designated priority to the external electronic device 201. For example, packets having a first priority among the packets for the audio service may be transmitted to the external electronic device 201 through the first CIG 210 (or the first CIS 211 included in the first CIG 210). For example, packets having a second priority among the packets for the audio service may be transmitted to the external electronic device 201 through the second CIG 220 (or the second CIS 221 included in the second CIG 220). For example, packets having a third priority among the packets for the audio service may be transmitted to the external electronic device 201 through the third CIG 230 (or the fourth CIS 231 included in the third CIG 230). In an embodiment, the transmission of the packets for the audio service may be described in more detail below with reference to FIG. 4.

In an embodiment, the external electronic device 201 may obtain the packets for the audio service from the electronic device 101 through the plurality of CIGs 210, 220, and 230 (or the CISs 211, 221, and 231 included in the plurality of CIGs 210, 220, and 230). In an embodiment, the external electronic device 201 may decode the packets for the audio service or data (e.g., a service data unit (SDU)) obtained from the packets. In an embodiment, the external electronic device 201 may decode the packets for the audio service or data (e.g., the SDU) obtained from the packets, based on (or in response) (or using) the information and/or the transmission parameters for the audio service.

In an embodiment, the external electronic device 201 may identify a group of packets and a playback order of the packets based on transmission parameters used to generate a plurality of CIGs 210, 220, and 230. For example, based on the transmission parameters, the external electronic device 201 may output (or play), at times corresponding to each other (or identical to each other) (or substantially identical), a plurality of packets (or a plurality of SDUs included in the plurality of packets) transmitted through the plurality of CIGs 210, 220, and 230 (or the CISs 211, 221, and 231 included in the CIGs 210, 220, and 230). The output time (or playback) (or transport latency) of the plurality of packets (or the plurality of SDUs included in the plurality of packets) may be identified based on an isochronous (ISO) interval, flush timeout (FT), and a synchronization delay (e.g., CIG_Sync_Delay and/or CIS_Sync_Delay). Therefore, the plurality of packets (or the plurality of SDUs included in the plurality of packets) transmitted through the plurality of CIGs 210, 220, and 230 (or the CISs 211, 221, and 231 included in the CIGs 210, 220, and 230) having different ISO_Intervals and FT may be output (or played) at times corresponding to each other (or identical to each other) (or substantially identical) by the synchronization delay (e.g., CIG _Sync_Delay and/or CIS_Sync_Delay). However, it is not limited thereto. In an embodiment, the external electronic device 201 may identify the group of the packets and the playback order of the packets through information of the packets (e.g., a group number, a sub group number, or a sequence number) obtained through the plurality of CIGs 210, 220, and 230 from the electronic device 101.

In an embodiment, the external electronic device 201 may decode one or more associated packets identified by the group of the packets and the playback order of the packets. In an embodiment, the external electronic device 201 may decode one or more packets having the same playback order identified through the group of the packets and the playback order of the packets. In an embodiment, the external electronic device 201 may decode one or more packets generated by encoding a bitstream during a designated playback time identified through the group of the packets and the playback order of the packets.

In an embodiment, the external electronic device 201 may output audio based on decoded data.

In an embodiment, the external electronic device 202 in the wireless environment may be audio sink devices such as earbuds or earphones. In an embodiment, the external electronic device 201 and the external electronic device 202 may be configured as a pair. In an embodiment, the external electronic device 202 may establish a communication link 240 with the external electronic device 201. For example, based on recognizing that a state of a door of a device (e.g., a cradle) changes from a closed state to an open state, while the device (e.g., the cradle) usable to charge a rechargeable battery of each of the external electronic devices 201 and 202 accommodates the external electronic devices 201 and 202, the communication link 240 may be established.

In an embodiment, the external electronic device 202 may receive data on audio from the electronic device 101 and output the audio through a speaker of the external electronic device 202 based on the data. In an embodiment, the external electronic device 202 may be referred to as a sink ASE, a server device, a peripheral device, a secondary device, or a sub device.

In an embodiment, the electronic device 101 may establish a second ACL connection 252 with the external electronic device 202. For example, the second ACL connection 252 may be used to control an ASE caused between the electronic device 101 and the external electronic device 202.

In an embodiment, the electronic device 101 may detect an event. For example, the event may include receiving a user request (e.g., a request for outputting audio using the external electronic device 202).

In an embodiment, the electronic device 101 may determine information for an audio service to be provided through the external electronic device 202 based on the event (or in response to the event).

In an embodiment, the electronic device 101 may transmit packets for the audio service to the external electronic device 202 according to the information for the audio service. In an embodiment, the electronic device 101 may use the plurality of CIGs 210, 220, and 230 including CISs 211, 222, and 232 to transmit the packets for the audio service to the external electronic device 202. In an embodiment, the electronic device 101 may use the CISs 211, 222, and 232 of the plurality of CIGs 210, 220, and 230 to transmit the packets for the audio service to the external electronic device 202.

In an embodiment, the external electronic device 202 may obtain the packets for the audio service from the electronic device 101 through the plurality of CIGs 210, 220, and 230 (or the CISs 211, 222, and 232 included in the plurality of CIGs 210, 220, and 230). In an embodiment, the external electronic device 202 may obtain information on the plurality of CIGs 210, 220, and 230 (or the CISs 211, 222, and 232 included in the CIGs 210, 220, and 230) from the electronic device 101 or the external electronic device 201, and may obtain the packets for the audio service through the plurality of CIGs 210, 220, and 230 (or the CISs 211, 222, and 232 included in the CIGs 210, 220, and 230) based on the obtained information. For example, the external electronic device 202 may obtain information on the CIG 210 (or the CIS 211 included in the CIG 210) from the external electronic device 201 through the communication link 240. For example, the external electronic device 202 may sniff (or obtain) (or receive) packets transmitted through the CIG 210 (or the CIS 211 included in the CIG 210) based on the information obtained through the communication link 240. For example, the external electronic device 202 may obtain information on the CIG 210 (or the CIS 211 included in the CIG 210) from the electronic device 101 through a communication link (e.g., the second ACL 252) between the electronic device 101 and the external electronic device 202. For example, the external electronic device 202 may obtain (or receive) packets transmitted through the CIG 210 (or the CIS 211 included in the CIG 210) based on the information obtained through the second ACL 252.

In an embodiment, the external electronic device 202 may identify a group of packets and a playback order of the packets based on transmission parameters used to generate a plurality of CIGs 210, 220, and 230. For example, based on the transmission parameters, the external electronic device 202 may output (or play), at times corresponding to each other (or identical to each other) (or substantially identical), a plurality of packets (or a plurality of SDUs included in the plurality of packets) transmitted through the plurality of CIGs 210, 220, and 230 (or the CISs 211, 222, and 232 included in the CIGs 210, 220, and 230). The output time (or playback) (or transport latency) of the plurality of packets (or the plurality of SDUs included in the plurality of packets) may be identified based on an ISO interval, FT, and a synchronization delay (e.g., CIG_Sync_Delay and/or CIS_Sync_Delay). Therefore, the plurality of packets (or the plurality of SDUs included in the plurality of packets) transmitted through the plurality of CIGs 210, 220, and 230 (or the CISs 211, 222, and 232 included in the CIGs 210, 220, and 230) having different ISO_Intervals and FT may be output (or played) at times corresponding to each other (or identical to each other) (or substantially identical) by the synchronization delay (e.g., CIG_Sync_Delay and/or CIS_Sync_Delay). However, it is not limited thereto. In an embodiment, the external electronic device 202 may identify the group of the packets and the playback order of the packets through information of the packets (e.g., a group number, a subgroup number, or a sequence number) obtained through the plurality of CIGs 210, 220, and 230 from the electronic device 101.

In an embodiment, the external electronic device 202 may decode one or more associated packets identified by the group of the packets and the playback order of the packets. In an embodiment, the external electronic device 202 may decode one or more packets having the same playback order identified through the group of the packets and the playback order of the packets. In an embodiment, the external electronic device 202 may decode one or more packets generated by encoding a bitstream during a designated playback time identified through the group of the packets and the playback order of the packets.

In an embodiment, the external electronic device 202 may output audio based on decoded data.

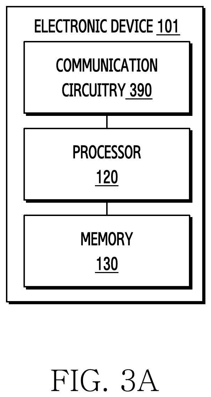

FIG. 3A is a simplified block diagram of an exemplary electronic device.

Referring to FIG. 3A, an electronic device 101 may include a processor 120, memory 130, and communication circuitry 390.

The processor 120 may be used to execute operations of the electronic device 101 exemplified in a description of FIGS. 4 to 13B. For example, the processor 120 may include at least a portion of the processor 120 of FIG. 1 or may correspond to at least a portion of the processor 120 of FIG. 1. For example, the processor 120 may include one or more processors including an application processor (AP) and/or a communication processor (CP). For example, the processor 120 may be implemented as a single chip, such as a system on chip (SoC), or may be implemented as multiple chips. For example, the processor 120 may be implemented as one integrated circuit or may be implemented as multiple integrated circuits. For example, the processor 120 may be arranged in a distributed manner in the electronic device 101.

The memory 130 may store (at least temporarily) instructions for executing the operations of the electronic device 101 exemplified in the description of FIGS. 4 to 13B. The instructions may be executed by the processor 120. The instructions may be included in one or more programs stored in the memory 130. For example, the memory 130 may include at least a portion of the memory 130 (or at least a portion of the non-volatile memory 134) of FIG. 1 or correspond to at least a portion of the memory 130 (or at least a portion of the non-volatile memory 134) of FIG. 1. For example, the memory 130 may include a main memory (e.g., random access memory (RAM)) in the electronic device 101, a register for the processor 120, a cache for the processor 120, a register for the communication circuitry 390, a buffer (or a soft buffer) for the communication circuitry 390, and/or an auxiliary memory (e.g., a hard disk drive (HDD) or a solid state drive (SSD)) of the electronic device 101. For example, the memory 130 may be implemented as a single chip or may be implemented as multiple chips. For example, the memory 130 may be implemented as one integrated circuit or may be implemented as multiple integrated circuits. For example, the memory 130 may be arranged in a distributed manner in the electronic device 101.

The communication circuitry 390 may be used to support Bluetooth communication (e.g., legacy Bluetooth communication (or classic Bluetooth communication and/or Bluetooth low energy (BLE)) between electronic device 101 and other electronic devices (e.g., external electronic devices 201 and 202). For example, the communication circuitry 390 may include at least a portion of the communication module 190 (or the wireless communication module 192) of FIG. 1, or may correspond to at least a portion of the communication module 190 (or the wireless communication module 192) of FIG. 1. For example, the communication circuitry 390 may include communication circuitry for Bluetooth. For example, the communication circuitry 390 may be used to establish a communication link. For example, the communication circuitry 390 may be used to transmit a packet to the external electronic devices 201 and 202 through the communication link. For example, the communication circuitry 390 may be used to receive a packet from the external electronic devices 201 and 202 through the communication link. For example, the communication circuitry 390 may be used to further support another communication technique (e.g., a wireless fidelity (Wi-Fi) communication technique) distinct from a Bluetooth communication technique. For example, the communication circuitry 390 may be implemented as a single chip or may be implemented as multiple chips. For example, the communication circuitry 390 may be implemented as one integrated circuit or may be implemented as multiple integrated circuits. For example, the communication circuitry 390 may be arranged in a distributed manner in the electronic device 101.

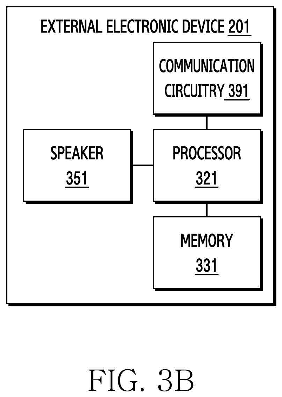

FIG. 3B is a simplified block diagram of an exemplary external electronic device.

Referring to FIG. 3B, an external electronic device 201 may include a processor 321, memory 331, communication circuitry 391, and a speaker 351.

In an embodiment, the processor 321 may be used to execute operations of the external electronic device 201 exemplified in a description of FIGS. 4 to 13B. For example, the processor 321 may include at least a portion of the processor 120 of FIG. 1 or may correspond to at least a portion of the processor 120 of FIG. 1.

In an embodiment, the memory 331 may (at least temporarily) store instructions for executing the operations of the external electronic device 201 exemplified in the description of FIGS. 4 to 13B. The instructions may be executed by the processor 321. The instructions may be included in one or more programs stored in the memory 331. For example, the memory 130 may include at least a portion of the memory 130 (or at least a portion of the non-volatile memory 134) of FIG. 1 or correspond to at least a portion of the memory 130 (or at least a portion of the non-volatile memory 134) of FIG. 1.

In an embodiment, the communication circuitry 391 may be used to support Bluetooth communication (e.g., legacy Bluetooth communication (or classic Bluetooth communication and/or BLE) between the external electronic device 201 and other electronic devices (e.g., an electronic device 101 and an external electronic device 202). For example, the communication circuitry 391 may include at least a portion of the communication module 190 (or the wireless communication module 192) of FIG. 1, or may correspond to at least a portion of the communication module 190 (or the wireless communication module 192) of FIG. 1. For example, the communication circuitry 391 may include communication circuitry for Bluetooth. For example, the communication circuitry 391 may be used to further support another communication technique (e.g., a Wi-Fi communication technique) distinct from a Bluetooth communication technique.

In an embodiment, the speaker 351 may be used to output audio to the outside of the external electronic device 201. For example, the speaker 351 may include at least a portion of the sound output module 155 (or the audio module 170) of FIG. 1, or may correspond to at least a portion of the sound output module 155 (or the audio module 170) of FIG. 1. For example, the speaker 351 may include circuitry for converting an electrical signal into sound to output audio.

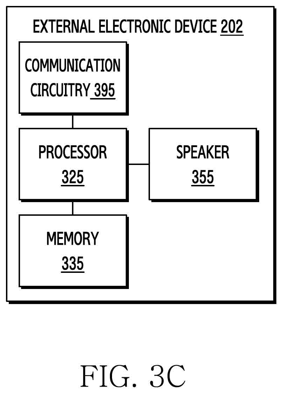

FIG. 3C is a simplified block diagram of an exemplary external electronic device.

Referring to FIG. 3C, an external electronic device 202 may include a processor 325, memory 335, communication circuitry 395, and a speaker 355.

In an embodiment, the processor 325 may be used to execute operations of the external electronic device 202 exemplified in description of FIGS. 4 to 13B. For example, the processor 325 may include at least a portion of the processor 120 of FIG. 1 or may correspond to at least a portion of the processor 120 of FIG. 1.

In an embodiment, the memory 335 may (at least temporarily) store instructions for executing the operations of the external electronic device 202 exemplified in the description of FIGS. 4 to 13B. The instructions may be executed by the processor 325. The instructions may be included in one or more programs stored in the memory 335. For example, the memory 335 may include at least a portion of the memory 130 (or at least a portion of the non-volatile memory 134) of FIG. 1 or correspond to at least a portion of the memory 130 (or at least a portion of the non-volatile memory 134) of FIG. 1.

In an embodiment, the communication circuitry 395 may be used to support Bluetooth communication (e.g., legacy Bluetooth communication (or classic Bluetooth communication and/or BLE) between the external electronic device 202 and other electronic devices (e.g., an electronic device 101 and an external electronic device 201). For example, the communication circuitry 395 may include at least a portion of the communication module 190 (or the wireless communication module 192) of FIG. 1, or may correspond to at least a portion of the communication module 190 (or the wireless communication module 192) of FIG. 1. For example, the communication circuitry 395 may include communication circuitry for Bluetooth. For example, the communication circuitry 395 may be used to further support another communication technique (e.g., a Wi-Fi communication technique) distinct from a Bluetooth communication technique.

In an embodiment, the speaker 355 may be used to output audio to the outside of the external electronic device 202. For example, the speaker 355 may include at least a portion of the sound output module 155 (or the audio module 170) of FIG. 1, or may correspond to at least a portion of the sound output module 155 (or the audio module 170) of FIG. 1. For example, the speaker 355 may include circuitry for converting an electrical signal into sound to output audio.

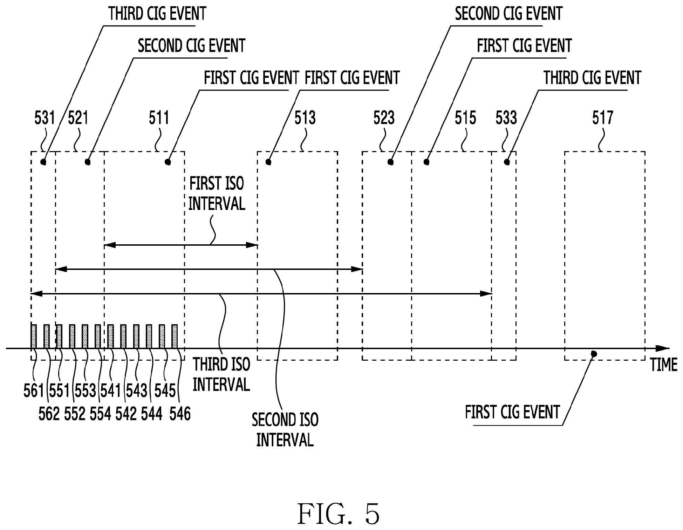

FIG. 4 is a flowchart illustrating an exemplary method executed in an electronic device to transmit a packet for outputting audio. FIG. 5 is a diagram illustrating an example of CIG events.

Referring to FIG. 4, in operation 410, an electronic device 101 may establish a communication link (e.g., a first ACL 251) with an external electronic device 201. For example, the operation 410 may be executed by executing instructions stored in memory 130. For example, the instructions may be executed by a processor 120. For example, the operation 410 may be executed using communication circuitry 390. As a non-limiting example, the operation 410 may be executed according to the method exemplified in the description of FIG. 2.

In operation 420, the electronic device 101 may detect an event. For example, the operation 420 may be executed by executing instructions stored in the memory 130. For example, the instructions may be executed by the processor 120.

The event may represent an event causing execution of operation 430 and/or operation 440. The event may be defined in the electronic device 101 to execute a transmission (or a differential transmission) (or an adaptive transmission) (or a selective transmission) executed in the operation 440 using information determined (or obtained) (or identified) (or generated) (or scheduled) in the operation 430.

For example, the event may include receiving (or recognizing) (or identifying) (or confirming) (or obtaining) a user request (e.g., a request to output lossless audio using the external electronic device 201). As a non-limiting example, the event may include receiving a touch input for an executable object (e.g., an executable object in a user interface of a software application for playing music) representing playing music set to output lossless audio. As a non-limiting example, the event may include recognizing (or identifying) (or obtaining) a voice command (e.g., "play music") received through a microphone of the electronic device 101.

For example, the event may include receiving a user input for executing the software application for playing music. As a non-limiting example, the event may include receiving a touch input for an icon (or an item) (or an object) (or an executable object) representing the software application. As a non-limiting example, the event may include receiving (or recognizing) (or identifying) (or obtaining) a voice command (e.g., "execute Samsung music") representing the execution of the software application through the microphone of the electronic device 101.

For example, the event may include receiving (or recognizing) (or confirming) (or identifying) (or obtaining) a request from the external electronic device 201 (or another external electronic device 112). As a non-limiting example, the event may include receiving the request transmitted from the external electronic device 201 through the communication link (e.g., the first ACL 251), in response to a user input pressing a button exposed through a portion of a housing of the external electronic device 201 (or a user input on a touch area formed on the housing of the external electronic device 201). As a non-limiting example, the event may include receiving the request transmitted from the external electronic device 201 through the communication link (e.g., the first ACL 251), in response to a voice command (e.g., "play music") obtained through a microphone of the external electronic device 201.

For example, the event may include recognizing (or confirming) (or identifying) a change in a state of a wireless environment. As a non-limiting example, the event may include recognizing a change in a state of the communication link (e.g., the first ACL 251). As a non-limiting example, the event may include confirming a decrease in a reception rate of a packet transmitted through the communication link (e.g., the first ACL 251).

In operation the 430, the electronic device 101 may determine (or identify) (or obtain) (or define) information for an audio service to be provided through the external electronic device 201 based on the event (or in response to the event). For example, the operation 430 may be executed by executing instructions stored in the memory 130. For example, the instructions may be executed by the processor 120. For example, the information determined in the operation 430 may be transmitted from the electronic device 101 to the external electronic device 201 through the communication link (e.g., the first ACL 251). However, it is not limited thereto.

For example, the information for the audio service determined in the operation 430 may include, for example, information on a codec (e.g., a lossless audio codec without loss of audio, a lossy audio codec having a high compression ratio, or a codec capable of compressing audio at a variable bit rate), information on the number of sets of audio bitstreams (or the number of layers of audio bitstreams) (or the number of packets of audio bitstreams), information on a size (or information on a bitrate) of each of sets (or layers) (or packets) of audio bitstreams for outputting audio, information on a priority of each of sets (or layers) (or packets) of audio bitstreams for outputting audio, information on time usable for a transmission (and/or one or more retransmissions) of each of sets (or layers) (or packets) of audio bitstreams for outputting audio (e.g., a max transport latency (MTL), a flush timeout, and/or the maximum number (or count) of retransmissions), and/or information on a method of decoding sets (or layers) (or packets) to be transmitted to the external electronic device 201 for the audio service.

In an embodiment, the sets (or the layers) (or the packets) of the audio bitstreams may be one of mandatory (or essential) (or core) (or common) data for outputting audio or optional (or extension or residual) data for outputting audio. In an embodiment, a priority of the mandatory data may be higher than a priority of the optional data.

For example, in a case that the sets (or the layers) (or the packets) of the audio bitstreams are divided into core data, first extension data for additional sound quality improvement, and second extension data for a sound field effect, a priority may be assigned in an order of the core data, the first extension data, and the second extension data.

For example, in a case that the sets (or the layers) (or the packets) of the audio bitstreams are divided into common data of audio for providing stereophonic sound, left residual data to be output from a left channel of the audio for providing the stereophonic sound, and right residual data to be output from a right channel of the audio for providing the stereophonic sound, a priority of the mandatory data may be higher than priorities of the left residual data and the right residual data. For example, priorities of the left residual data to be output from the left channel of the audio for providing the stereophonic sound and the right residual data to be output from the right channel of the audio for providing the stereophonic sound may be the same as each other.

For example, the mandatory data may be data independently decodable without optional data. Being independently decodable without the optional data may refer to that restoration (or output) of audio is possible by decoding the mandatory data. In an embodiment, the mandatory data may be referred to as a base layer (or core data). For example, the mandatory data may be the common data of the audio for providing the stereophonic sound.

For example, the optional data may be data that is not independently decodable without the mandatory data. The optional data may not enable restoration (or output) of audio without the mandatory data. In an embodiment, the optional data may be referred to as an extension layer (or a base layer) (or extension data). In an embodiment, the optional data may include data for enhancing a quality of audio output through the external electronic device 201 (e.g., data for additional sound quality improvement and/or an additional sound field effect). In an embodiment, a priority of optional data of an upper layer may be higher than a priority of optional data of a lower layer. For example, in a hierarchy structure of the mandatory data and the optional data, the optional data may have a lower priority as it is positioned at a layer farther from the base layer (or the core data), which is the mandatory data. According to an embodiment, the optional data may enable restoration (or output) of audio without the mandatory data.

For example, the optional data may be residual data of the audio for providing the stereophonic sound. For example, the residual data may be data indicating a difference between the left channel and the right channel of the audio for providing the stereophonic sound. For example, the residual data may be one of the left residual data to be output from the left channel or the right residual data to be output from the right channel.

For example, the information for the audio service on the core data, the first extension data, and the second extension data of the sets (or the layers) (or the packets) of the audio bitstreams may be determined as in Table 1 below.

**[Table 1]**

| Group | Codec | Data type | SDU size | Interval | MTL | Maximum number of retransmissions | Priority |
|---|---|---|---|---|---|---|---|
| 1 | SS SSC | Core | 120byte | 10ms | 100ms | 28 | 1 |
| 2 | SS SSC | Extension 1 | 100byte | 10ms | 100ms | 10 | 2 |
| 3 | SS SSC | Extension 2 | 80byte | 10ms | 20ms | 1 | 3 |

In Table 1, the group 1, the group 2, and the group 3 may be encoded by the same codec (e.g., SS SSC).

For example, the information for the audio service on the common data, the left residual data, and the right residual data of the sets (or the layers) (or the packets) of the audio bitstreams may be determined as in Table 2 below.

**[Table 2]**

| Group | Codec | Data type | SDU size | Interval | MTL | Maximum number of retransmissions | Priority |
|---|---|---|---|---|---|---|---|
| 1 | SS SSC | Common | 120byte | 10ms | 100ms | 28 | 1 |
| 2 | SS SSC | Residual L | 64byte | 10ms | 40ms | 10 | 2 |
| 3 | SS SSC | Residual R | 64byte | 10ms | 40ms | 10 | 2 |

In Table 2, the group 1, the group 2, and the group 3 may be encoded by the same codec (e.g., SS SSC). In Table 2, the parameters of the group 2 and the group 3 may be the same as each other.

For example, referring to Tables 1 and 2, the electronic device 101 may set an SDU size to be large, a bit rate (e.g., the SDU size/interval) to be high, a MTL to be long, flush timeout to be long, or the maximum number of retransmissions to be large, with respect to a group with a high priority. For example, the electronic device 101 may set an SDU size to be small, a bit rate (e.g., the SDU size/interval) to be low, a MTL to be, a flush timeout to be short, or the maximum number of retransmissions to be small, with respect to a group with a lower priority.

In the operation 440, the electronic device 101 may transmit the packets for the audio service to the external electronic device 201 according to information for the audio service. In an embodiment, the electronic device 101 may generate (or use) a plurality of connected isochronous groups (CIGs) 210, 220, and 230 including connected isochronous streams (CISs) 211, 221, and 231 to transmit the packets for the audio service to the external electronic device 201.

In an embodiment, the electronic device 101 may transmit the packets to the external electronic device 201 through a CIG corresponding to a priority of each of the packets for the audio service. In an embodiment, the electronic device 101 may transmit the packets to the external electronic device 201 according to a priority of each of the packets for the audio service, by using the number of CIGs corresponding to the number of priorities. For example, packets (or mandatory data) (or core data) (or common data) of which a priority is a first priority may be transmitted to the external electronic device 201 through the CIG 210. For example, packets (or optional data) (or extension data) (or residual data) of which a priority is a second priority may be transmitted to the external electronic device 201 through the CIG 220 or the CIG 230.

For example, the electronic device 101 may transmit the core data for the audio service to the external electronic device 201 through the CIG 210 including the first CIS 211. For example, the electronic device 101 may transmit the first extension data for the audio service to the external electronic device 201 through the CIG 220 including the second CIS 221. For example, the electronic device 101 may transmit the second extension data for the audio service to the external electronic device 201 through the CIG 230 including the fourth CIS 231.

For example, the electronic device 101 may transmit the common data for the audio service to the external electronic device 201 through the CIG 210 including the first CIS 211. For example, the electronic device 101 may transmit the right residual data for the audio service to the external electronic device 201 through the CIG 220 including the second CIS 221.

In an embodiment, in each of the plurality of CIGs 210, 220, and 230, a transmission parameter (or a communication parameter) (or a quality of service (QoS)) may be set (or designated) (or determined) according to the information for the audio service.

For example, transmission parameters (or communication parameters) may include at least one of data indicating an identifier of a CIG for audio streaming (e.g., a CIG_ID), data indicating an identifier of a CIS for audio streaming (e.g., a CIS_ID), data indicating a period for audio streaming (e.g., an service data unit (SDU)_Interval), data indicating a method for arranging sub events of a plurality of CISs (e.g., Packing), data indicating whether data packets for audio streaming may be framed (e.g., Framing), data indicating a max transport latency of audio streaming (e.g., Max _Transport_Latency), data indicating a maximum size of a data packet for audio streaming (e.g., Max_SDU), data indicating the number of retransmissions of the data packet for audio streaming (e.g., Retransmission_Number), data indicating the number of sub events in a CIS event (e.g., NSE), data indicating a time interval between two consecutive sub events in one CIS event (e.g., Sub_Interval), data indicating a maximum length of a subevent (e.g., SE_Length), data indicating the maximum number (Max_PDU) of bytes that a PDU may transmit, data indicating a time interval between two consecutive CIS anchor points (e.g., ISO_Interval), data indicating the number (flush timeout (FT)) of time intervals (ISO_Intervals) that may be used before discarding the data packet, data for a synchronization delay (e.g., CIG_Sync_Delay and/or CIS_Sync_Delay) for adjusting a playback time (or output time) (or transport latency) of the data packet, data indicating an offset time (CIS_Offset) between a first CIS anchor point and an ACL anchor point, or data indicating a presentation delay of audio streaming (e.g., Presentation_Delay). In an embodiment, the flush timeout (FT) may mean a time that may be used before the data packet is discarded. For example, the transmission parameters may include at least one of data indicating a codec identifier for audio streaming (e.g., Codec _ID), data indicating a codec-specific configuration (e.g., Codec_Specific_Configuration), or data indicating a length of the codec-specific configuration (e.g., Codec_Specific_Configuration _Length). However, it is not limited thereto. In an embodiment, output time (or playback) (or transport latency) of a plurality of data packets (or a plurality of SDUs included in the plurality of data packets) may be set (or designated) (or determined) based on the ISO interval, the FT, and the synchronization delay (e.g., CIG_Sync_Delay and/or CIS_Sync_Delay). Therefore, the electronic device 101 may set (or designate) (or determine) the synchronization delay (e.g., CIG_Sync_Delay and/or CIS_Sync_Delay) such that a plurality of data packets (or a plurality of SDUs included in the plurality of data packets) transmitted through a plurality of CIGs (or CISs included in the CIGs) having different ISO intervals and FTs are output (or played) at times corresponding to each other (or identical to each other) (or substantially identical).

In an embodiment, the electronic device 101 may set NSE and/or flush timeout (FT) to be high with respect to the group with the high priority. In an embodiment, the electronic device 101 may apply hybrid packing, other than general packing (e.g., sequential packing or interleaved packing), with respect to the group with the high priority. For example, the hybrid packing may be a method of arranging sub events such that CISs of two or more CIGs are set to overlap in time with each other and then a CIS of a CIG with a high priority occupies the corresponding period. In an embodiment, in the electronic device 101, the electronic device may dispose the CISs of the two or more CIGs after minimum time (e.g., T_IFS, T_MSS) required for a channel change or a transmission/reception mode change.

For example, the electronic device 101 may set an isochronous (ISO) interval to 10 ms as a transmission parameter of the CIG 210 including the first CIS 211 for the core data for the audio service. For example, the electronic device 101 may set an ISO interval to 30 ms as a transmission parameter of the CIG 220 including the second CIS 221 for the first extension data for the audio service. For example, the electronic device 101 may set an ISO interval to 60 ms as a transmission parameter of the CIG 230 including the fourth CIS 231 for the second extension data for the audio service. However, it is not limited thereto.

For example, the electronic device 101 may set an ISO interval to 10 ms as a transmission parameter of the CIG 210 including the first CIS 211 for the common data for the audio service. For example, the electronic device 101 may set an ISO interval to 30 ms as a transmission parameter of the CIG 220 including the second CIS 221 for the right residual data for the audio service. However, it is not limited thereto.

For example, the electronic device 101 may generate at least two or more CISs based on the same access address and/or the same used channel map for identifying a piconet. For example, the electronic device 101 may use the same physical channel based on the same access address and/or the same used channel map with respect to a CIS for the external electronic device 201 and a CIS for an external electronic device 202.

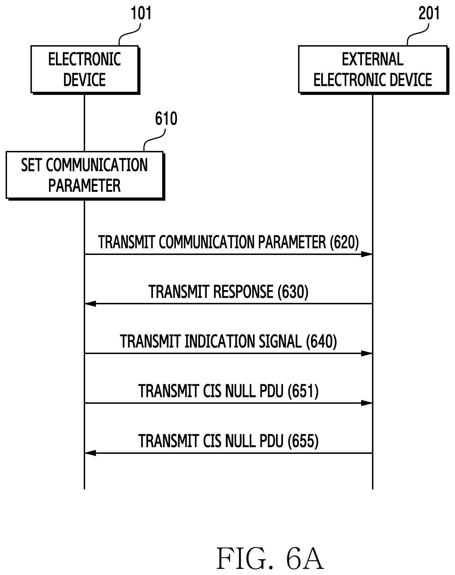

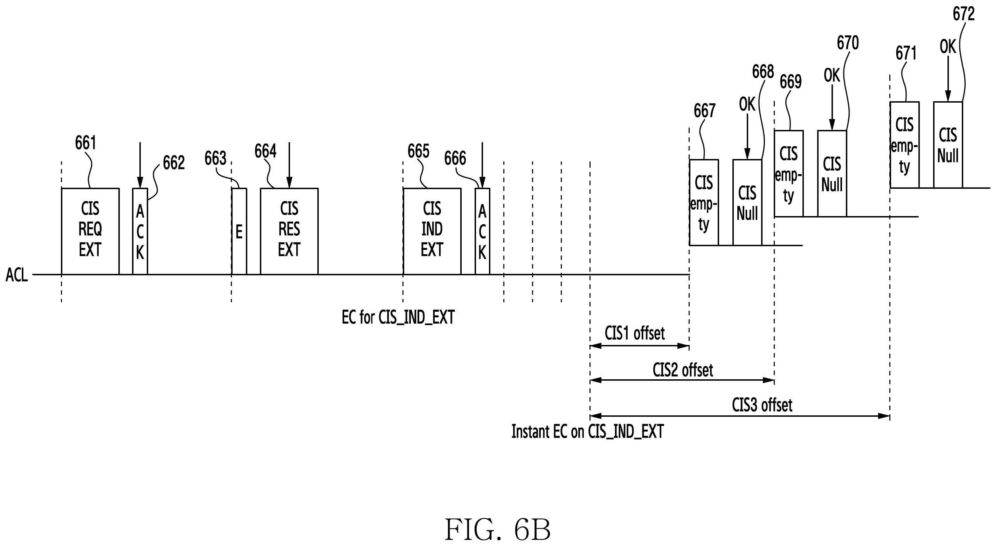

For example, the transmission parameters determined in the operation 440 may be transmitted from the electronic device 101 to the external electronic device 201 through the first ACL 251. However, it is not limited thereto. In an embodiment, an operation for transmitting information on the plurality of generated CIGs 210, 220, and 230 by the electronic device 101 to the external electronic device 201 may be described in more detail with reference to FIGS. 6A and 6B.

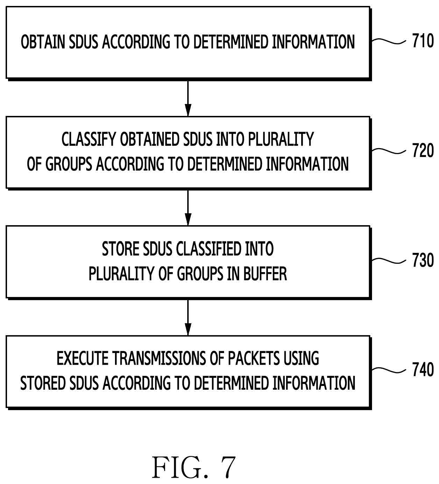

For example, referring to FIG. 5, packets having the highest priority transmitted through CIS events of first CIG events 511, 513, 515, and 517 may have the most transmission opportunities 541, 542, 543, 544, 545, and 546. In addition, an ISO interval (e.g., a first ISO interval) between the CIS events of the first CIG events 511, 513, 515, and 517 for transmitting the packets having the highest priority may be the shortest. Packets having the second highest priority transmitted through CIS events of second CIG events 521 and 523 may have the next most transmission opportunities 551, 552, 553, and 554. In addition, an ISO interval (e.g., a second ISO interval) between the CIS events of the second CIG events 521 and 523 for transmitting the packets having the second highest priority may be the next shortest after the first ISO interval. Packets having the lowest priority transmitted through CIS events of third CIG events 531 and 533 may have the least transmission opportunities 561 and 562. In addition, an ISO interval (e.g., a third ISO interval) between the CIS events of the third CIG events 531 and 533 for transmitting the packets having the lowest priority may be the longest. As confirmed through FIG. 5, the electronic device 101 may execute a differential transmission (or a selective transmission) (or an adaptive transmission) to the external electronic device 201 for the audio service. For example, the electronic device 101 may execute the differential transmission such that a packet having a high priority has more transmission opportunities than another packet having a low priority among packets for outputting audio to be transmitted to the external electronic device 201 for the audio service. For example, the electronic device 101 may classify SDUs for generating packets to be transmitted to the external electronic device 201 for the audio service into a plurality of groups, and may determine information and/or a transmission parameter for the audio service such that an SDU in a group having a high priority has more transmission opportunities than an SDU in a group having a low priority among the plurality of groups. The differential transmission is exemplified in more detail in a description of FIG. 7.

FIG. 6A is a diagram representing an example of a signal flow for generating a CIG event including at least one CIS event.

In an embodiment, in operation 610, an electronic device 101 may set (or generate) a communication parameter (or a transmission parameter). For example, transmission parameters (or communication parameters) may include at least one of CIG_ID, CIS_ID, SDU_Interval, Packing, Framing, Max_Transport_Latency, Max_SDU, Retransmission_Number, NSE, Sub_Interval, SE_Length, Max_PDU, ISO_Interval, FT, CIS_Offset, or Presentation_Delay. However, it is not limited thereto. For example, transmission parameters (or communication parameters) may include at least one of Codec_ID, Codec_Specific_Configuration, or Codec_Specific_Configuration_Length.

In an embodiment, in operation 620, the electronic device 101 may transmit (or deliver) a communication parameter (or a transmission parameter) to an external electronic device 201. For example, the electronic device 101 may transmit an LL_CIS_REQ packet including the communication parameter (or the transmission parameter) to the external electronic device 201 through a first ACL (e.g., the first ACL 251 of FIG. 1).

In an embodiment, in operation 630, the external electronic device 201 may transmit a response to the electronic device 101. For example, the external electronic device 201 may transmit an LL_CIS_RES packet to the electronic device 101 through the first ACL (e.g., the first ACL 251 of FIG. 1).

In an embodiment, in operation 640, the electronic device 101 may transmit (or deliver) an indication signal representing that a CIS PDU is transmitted to the external electronic device 201. For example, the electronic device 101 may transmit an LL_CIS_IND packet including a communication parameter (or a transmission parameter) to the external electronic device 201 through the first ACL (e.g., the first ACL 251 of FIG. 1).

In an embodiment, in operation 651, the electronic device 101 may transmit (or deliver) a CIS NULL PDU to the external electronic device 201 through a CIS (e.g., a first CIS 211) set through the communication parameter. The external electronic device 201 receiving the CIS NULL PDU through the CIS (e.g., the first CIS 211) may identify that the CIS (e.g., the first CIS 211) and a CIG (e.g., a CIG 210) including the CIS (e.g., the first CIS 211) are generated.

In an embodiment, in operation 655, the external electronic device 201 may transmit (or deliver) the CIS NULL PDU to the electronic device 101 through the CIS (e.g., the first CIS 211) set through the communication parameter. The electronic device 101 receiving the CIS NULL PDU through the CIS (e.g., the first CIS 211) may identify that the CIS (e.g., the first CIS 211) and the CIG (e.g., the CIG 210) including the CIS (e.g., the first CIS 211) are generated.

In an embodiment, the electronic device 101 and the external electronic device 201 may generate at least one CIS included in the CIG (e.g., the CIG 210) by repeating the operations 620 to 655. For example, the electronic device 101 and the external electronic device 201 may generate two CISs 221 and 222 included in a CIG (e.g., a CIG 220) by repeating the operations 620 to 655 twice.

According to an embodiment, the electronic device 101 may simultaneously generate a plurality of CISs included in a CIG by transmitting (or delivering) a communication parameter (or a transmission parameter) for generating the plurality of CISs included in the CIG to the external electronic device 201 through a message.

According to an embodiment, the electronic device 101 may simultaneously generate a plurality of CISs included in a plurality of CIGs by transmitting (or delivering) a communication parameter (or a transmission parameter) for generating the plurality of CISs included in each of the plurality of CIGs to the external electronic device 201 through a message.

FIG. 6B is a diagram illustrating an example of a signal flow for generating a plurality of CIS events.

In an embodiment, in operation 661, an electronic device 101 may transmit, to an external electronic device (e.g., an external electronic device 201), a message (e.g., CIS_REQ_EXT) including a communication parameter (or a transmission parameter), through an ACL (e.g., a first ACL 251). For example, transmission parameters (or communication parameters) may include at least one of CIG_ID, CIS_ID, SDU_Interval, Packing, Framing, Max_Transport_Latency, Max_SDU, Retransmission_Number, NSE, Sub_Interval, SE_Length, Max_PDU, ISO_Interval, FT, CIS_Offset, or Presentation_Delay. However, it is not limited thereto. For example, transmission parameters (or communication parameters) may include at least one of Codec_ID, Codec_Specific_Configuration, or Codec _Specific_Configuration_Length.

In an embodiment, in operation 662, the electronic device 101 may obtain, from the external electronic device (e.g., the external electronic device 201), a response (e.g., ACK or NACK) indicating whether the message (e.g., CIS _REQ_EXT) including the communication parameter (or the transmission parameter) is received through the ACL (e.g., the first ACL 251).

In an embodiment, in operation 663, the electronic device 101 may transmit, to the external electronic device (e.g., the external electronic device 201), a message (e.g., E) that causes the external electronic device (e.g., the external electronic device 201) to transmit a packet for a response (e.g., CIS_RES_EXT) for CIS_REQ_EXT, through the ACL (e.g., the first ACL 251).

In an embodiment, in operation 664, the electronic device 101 may obtain, from the external electronic device (e.g., the external electronic device 201), the response (e.g., CIS_RES_EXT) for CIS_REQ_EXT, through the ACL (e.g., the first ACL 251).

In an embodiment, in operation 665, the electronic device 101 may transmit a message (e.g., CIS_IND_EXT) including a partial transmission parameter (e.g., CIS_Offset or a synchronization delay (e.g., CIG_Sync_Delay or CIS_Sync_Delay)) to the external electronic device (e.g., the external electronic device 201), through the ACL (e.g., the first ACL 251) at designated time (e.g., time set by an event counter for CIS_IND_EXT).

In an embodiment, in operation 666, the electronic device 101 may obtain, from the external electronic device (e.g., the external electronic device 201), the response (e.g., ACK or NACK) indicating whether of the message (e.g., CIS_IND_EXT) including the partial transmission parameter (e.g., CIS_Offset or the synchronization delay (e.g., CIG_Sync_Delay or CIS_Sync_Delay)), through the ACL (e.g., the first ACL 251).

In an embodiment, in operation 667, the electronic device 101 may transmit, to the external electronic device (e.g., the external electronic device 201), a designated packet (e.g., CIS_empty) through a first CIS (e.g., a first CIS 211) at time by CIS1 offset for the first CIS (e.g., the first CIS 211) from designated time (e.g., time set by an instant event counter for CIS_IND_EXT).

In an embodiment, in operation 668, the electronic device 101 may obtain a designated packet (e.g., CIS _Null) through the first CIS (e.g., the first CIS 211) from the external electronic device (e.g., the external electronic device 201). Accordingly, the first CIS (e.g., the first CIS 211) may be set between the electronic device 101 and the external electronic device (e.g., the external electronic device 201).

In an embodiment, in operation 669, the electronic device 101 may transmit, to the external electronic device (e.g., the external electronic device 201), the designated packet (e.g., CIS_empty) through a second CIS (e.g., a second CIS 221) at time by CIS2 offset for the second CIS (e.g., the second CIS 221) from the designated time (e.g., the time set by the instant event counter for CIS_IND_EXT).

In an embodiment, in operation 670, the electronic device 101 may obtain the designated packet (e.g., CIS _Null) through the second CIS (e.g., the second CIS 221) from the external electronic device (e.g., the external electronic device 201). Accordingly, the second CIS (e.g., the second CIS 221) may be set between the electronic device 101 and the external electronic device (e.g., the external electronic device 201).

In an embodiment, in operation 671, the electronic device 101 may transmit, to the external electronic device (e.g., the external electronic device 201), the designated packet (e.g., CIS_empty) through a third CIS (e.g., a fourth CIS 231) at time by CIS3 offset for the third CIS (e.g., the fourth CIS 231) from the designated time (e.g., the time set by the instant event counter for CIS_IND_EXT).

In an embodiment, in operation 672, the electronic device 101 may obtain the designated packet (e.g., CIS _Null) through the third CIS (e.g., the fourth CIS 231) from the external electronic device (e.g., the external electronic device 201). Accordingly, the third CIS (e.g., the fourth CIS 231) may be set between the electronic device 101 and the external electronic device (e.g., the external electronic device 201).

As described above, the electronic device 101 may generate a plurality of CISs by transmitting one CIS_REQ_EXT, CIS_RES_EXT, and CIS_IND_EXT to the external electronic device (e.g., the external electronic device 201).

FIG. 7 is a flowchart illustrating an exemplary method in which an electronic device uses information determined for a transmission of a packet for outputting audio.

Referring to FIG. 7, in operation 710, an electronic device 101 may obtain SDUs according to the information for the audio service determined in the operation 430. For example, the operation 710 may be executed by executing instructions stored in memory 130. For example, the instructions may be executed by a processor 120.

For example, the electronic device 101 may obtain (or generate) encoded data by encoding data on a sound source in the electronic device 101 using a codec (e.g., the codec exemplified in the description of the operation 430) for the audio service. For example, the encoded data may include mandatory data (e.g., core data or common data) for outputting audio and auxiliary data (e.g., extension data or residual data) for outputting audio. For example, the electronic device 101 may obtain the SDUs from the encoded data.

In operation 720, the electronic device 101 may classify the SDUs obtained in the operation 710 into a plurality of groups according to the information for the audio service determined in the operation 430. For example, the operation 720 may be executed by executing instructions stored in the memory 130. For example, the instructions may be executed by the processor 120. In an embodiment, the electronic device 101 may determine the number of groups into which the SDUs obtained in the operation 710 are classified, based on a communication environment (e.g., communication speed or communication congestion). In an embodiment, the electronic device 101 may classify the SDUs obtained in the operation 710 based on the number of groups determined based on the communication environment (e.g., the communication speed or the communication congestion).

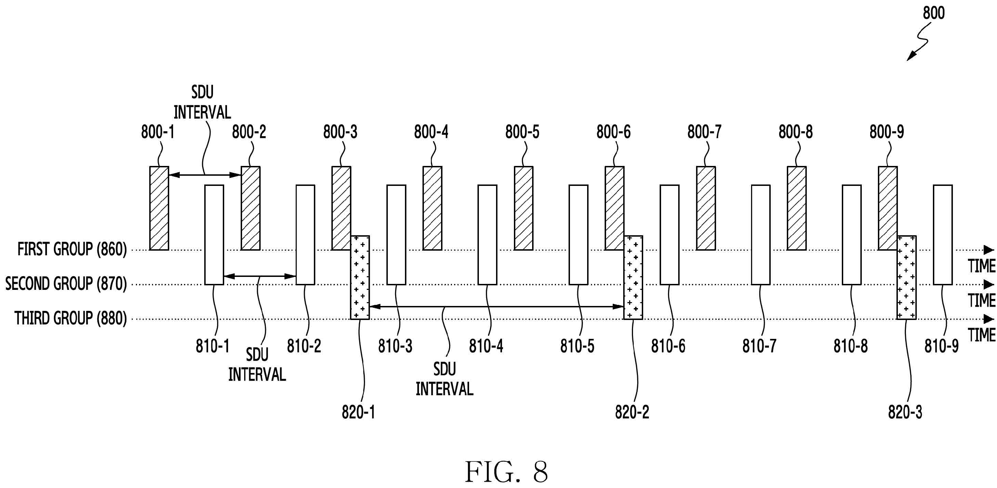

For example, a first group among the plurality of groups may have a first priority. For example, a second group among the plurality of groups may have a second priority lower than the first priority. For example, a portion of the SDUs including the mandatory data for outputting audio may be classified into the first group, and another portion of the SDUs including the auxiliary data for outputting audio may be classified into the second group. Classifying the SDUs into the plurality of groups in the operation 720 is exemplified in a description of FIG. 8.

A type of data in each of the SDUs included in the first group among the plurality of groups may be different from a type of data in each of the SDUs included in the second group having a lower priority than the first group among the plurality of groups. For example, a type of data in each of SDUs included in a third group having a lower priority than the second group among the plurality of groups may be different from a type of data in each of SDUs in the first group and a type of data in each of SDUs in the second group. For example, the type of the data in each of the SDUs in the first group is core data, which is mandatory data for outputting audio, the type of the data in each of the SDUs in the second group is first extension data, which is auxiliary data for outputting audio, and the type of the data in each of the SDUs in the third group may be second extension data, which is auxiliary data for outputting audio and has a priority lower than a priority of the first extension data.

For example, a size of each of the SDUs included in the first group among the plurality of groups may be larger than a size of each of the SDUs included in the second group among the plurality of groups. For example, a size of each of the SDUs included in the third group among the plurality of groups may be smaller than a size of each of the SDUs in the second group among the plurality of groups.

For example, an SDU interval for each of the SDUs included in the first group among the plurality of groups may be (substantially) the same as an SDU interval for each of the SDUs included in the second group among the plurality of groups and an SDU interval for each of the SDUs included in the third group among the plurality of groups. However, it is not limited thereto. For example, an SDU interval for each of SDUs included in each of the plurality of groups may be determined according to a priority of each of the plurality of groups. For example, the SDU interval for each of the SDUs included in the first group among the plurality of groups may be shorter than the SDU interval for each of the SDUs included in the second group among the plurality of groups and the SDU interval for each of the SDUs included in the third group among the plurality of groups.

For example, since the size of each of the SDUs in the first group is greater than the size of each of the SDUs in the second group, and the SDU interval for each of the SDUs in the first group is the same as the SDU interval for each of the SDUs in the second group, a bit rate for each of the SDUs in the first group may be higher than a bit rate for each of the SDUs in the second group. For example, since the size of each of the SDUs in the second group is larger than the size of each of the SDUs in the third group, and the SDU interval for each of the SDUs in the second group is the same as the SDU interval for each of the SDUs in the third group, a bit rate for each of the SDUs in the second group may be higher than a bit rate for each of the SDUs in the third group.

For example, transmission opportunities of a packet (e.g., a protocol data unit (PDU)) obtained from each of the SDUs in the first group may be more than transmission opportunities of a packet obtained from each of the SDUs in the second group. For example, transmission opportunities of a packet obtained from each of the SDUs in the second group may be more than transmission opportunities of a packet obtained from each of the SDUs in the third group. For example, time allocated for a transmission of the packet obtained from each of the SDUs in the first group and one or more retransmissions of the packet obtained from each of the SDUs in the first group may be longer than time allocated for a transmission of the packet obtained from each of the SDUs in the second group and one or more retransmissions of the packet obtained from each of the SDUs in the second group. For example, time allocated for a transmission of the packet obtained from each of the SDUs in the second group and one or more retransmissions of the packet obtained from each of the SDUs in the second group may be longer than time allocated for a transmission of the packet obtained from each of the SDUs in the third group and one or more retransmissions of the packet obtained from each of the SDUs in the third group.

For example, the maximum number (or counter) of retransmissions of the packet obtained from each of the SDUs in the first group may be greater than the maximum number of retransmissions of the packet obtained from each of the SDUs in the second group. For example, the maximum number (or counter) of retransmissions of the packet obtained from each of the SDUs in the second group may be greater than the maximum number of retransmissions of the packet obtained from each of the SDUs in the third group.

In operation 730, the electronic device 101 may store the SDUs classified into the plurality of groups in a buffer for communication circuitry 390. For example, the operation 730 may be executed by executing instructions stored in the memory 130. For example, the instructions may be executed by the processor 120. For example, the instructions may be executed by the communication circuitry 390 according to a control of the processor 120.

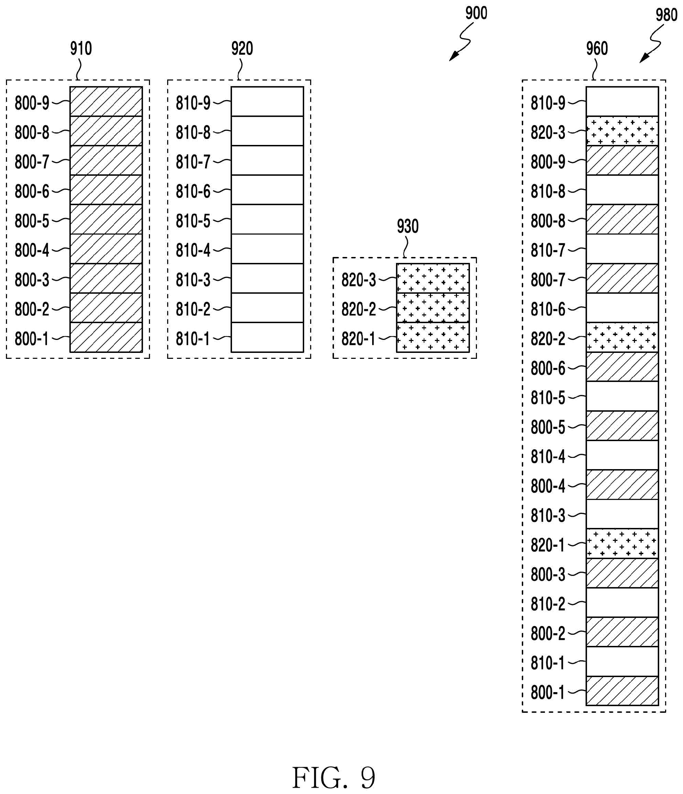

For example, the buffer may be implemented as hardware or may be implemented as software. Storing the SDUs in the buffer is exemplified in a description of FIG. 9.

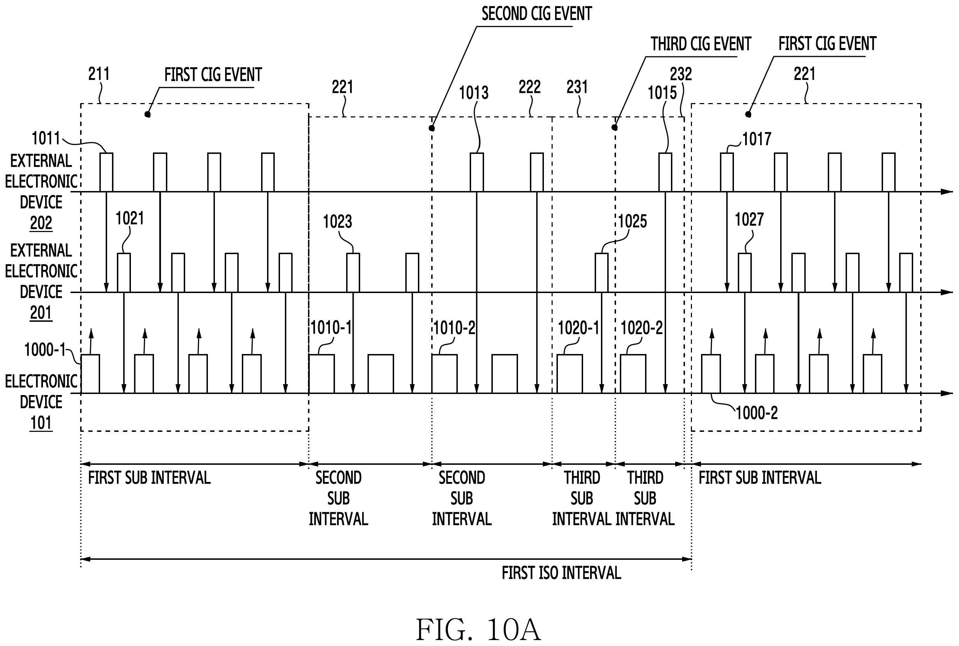

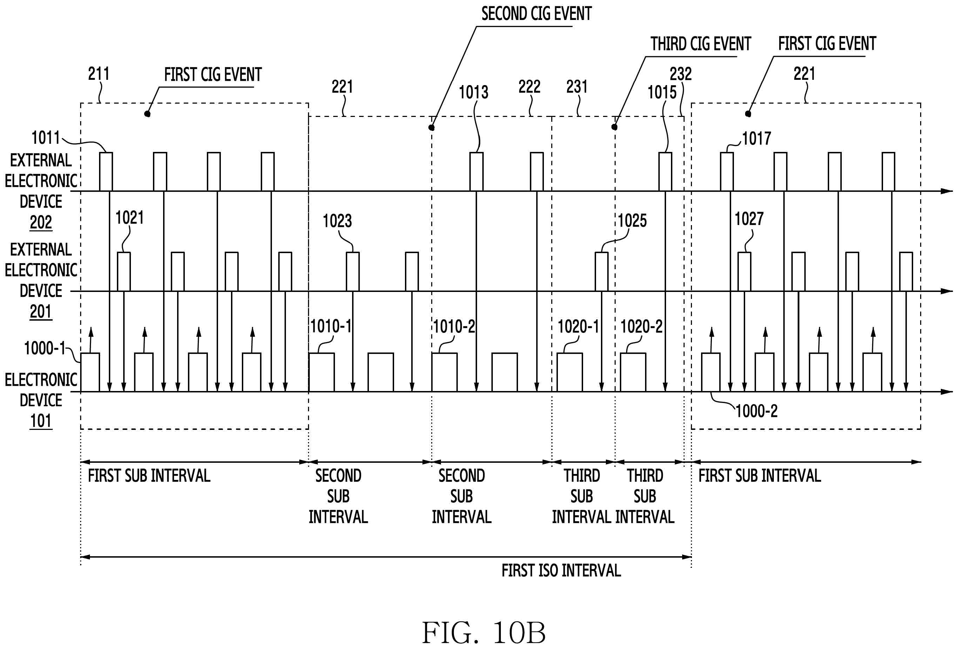

In operation 740, the electronic device 101 may execute transmissions of packets using the SDUs stored in the buffer according to the information for the audio service determined in the operation 430. For example, the operation 740 may be executed by executing instructions stored in the memory 130. For example, the instructions may be executed by the processor 120. For example, the instructions may be executed by the communication circuitry 390 according to a control of the processor 120. For example, the instructions may be executed using the communication circuitry 390. The operation 740 is exemplified in more detail in a description of FIG. 10A or 10B.

FIG. 8 illustrates an exemplary method of generating service data units (SDUs) used to generate packets to be transmitted to an external electronic device.

Referring to FIG. 8, a chart 800 illustrates a method of classifying obtained SDUs into a plurality of groups. A horizontal axis of the chart 800 represents time.

For example, the plurality of groups may include a first group 860 for an SDU having a first priority, a second group 870 for an SDU having a second priority lower than the first priority, and a third group 880 for an SDU having a third priority lower than the second priority.

For example, based on obtaining an SDU 800-1 including mandatory data for outputting first audio, an electronic device 101 may classify the SDU 800-1 into the first group 860 (or may include the SDU 800-1 in the first group 860). For example, based on obtaining an SDU 810-1 including auxiliary data for outputting the first audio after classifying the SDU 800-1 into the first group 860 (or after obtaining the SDU 800-1), the electronic device 101 may classify the SDU 810-1 into the second group 870. As a non-limiting example, the data in the SDU 810-1 may be usable to apply an effect (e.g., sound quality improvement and/or a sound field effect) to the first audio.

For example, based on obtaining an SDU 800-2 including mandatory data for outputting second audio following the first audio after classifying the SDU 810-1 into the second group 870 (or after obtaining the SDU 810-1), the electronic device 101 may classify the SDU 800-2 into the first group 860. For example, based on obtaining an SDU 810-2 including auxiliary data for outputting the second audio after classifying the SDU 800-2 into the first group 860, the electronic device 101 may classify the SDU 810-2 into the second group 870. As a non-limiting example, the data in the SDU 810-2 may be usable to apply an effect to the second audio.

For example, based on obtaining an SDU 800-3 including mandatory data for outputting third audio following the second audio after classifying the SDU 810-2 into the second group 870, the electronic device 101 may classify the SDU 800-3 into the first group 860. For example, based on obtaining an SDU 820-1 including auxiliary data for outputting each of the first audio to the third audio after classifying the SDU 800-3 into the first group 860, the electronic device 101 may classify the SDU 820-1 into the third group 880. As a non-limiting example, the data in the SDU 820-1 may be usable to apply an effect to each of the first audio to the third audio. For example, based on obtaining an SDU 810-3 including auxiliary data for outputting the third audio after classifying the SDU 820-1 into the third group 880, the electronic device 101 may classify the SDU 810-3 into the second group 870. The data in the SDU 810-3 may be usable to apply an effect to the third audio.

For example, based on obtaining an SDU 800-4 including mandatory data for outputting fourth audio following the third audio after classifying the SDU 810-3 into the second group 870, the electronic device 101 may classify the SDU 800-4 into the first group 860. For example, based on obtaining an SDU 810-4 including auxiliary data for outputting the fourth audio after classifying the SDU 800-4 into the first group 860, the electronic device 101 may classify the SDU 810-4 into the second group 870. The data in the SDU 810-4 may be usable to apply an effect to the fourth audio.

For example, based on obtaining an SDU 800-5 including mandatory data for outputting fifth audio following the fourth audio after classifying the SDU 810-4 into the second group 870, the electronic device 101 may classify the SDU 800-5 into the first group 860. For example, based on obtaining an SDU 810-5 including auxiliary data for outputting the fifth audio after classifying the SDU 800-5 into the first group 860, the electronic device 101 may classify the SDU 810-5 into the second group 870. The data in the SDU 810-5 may be usable to apply an effect to the fifth audio.

For example, based on obtaining an SDU 800-6 including mandatory data for outputting sixth audio following the fifth audio after classifying the SDU 810-5 into the second group 870, the electronic device 101 may classify the SDU 800-6 into the first group 860. For example, based on obtaining an SDU 820-2 including auxiliary data for outputting each of the fourth audio to the sixth audio after classifying the SDU 800-6 into the first group 860, the electronic device 101 may classify the SDU 820-2 into the third group 880. For example, the data in the SDU 820-2 may be usable to apply an effect to each of the fourth audio to the sixth audio. For example, based on obtaining an SDU 810-6 including auxiliary data for outputting the sixth audio after classifying the SDU 820-2 into the third group 880, the electronic device 101 may classify the SDU 810-6 into the second group 870. The data in the SDU 810-6 may be usable to apply an effect to the sixth audio.

For example, based on obtaining an SDU 800-7 including mandatory data for outputting seventh audio following the sixth audio after classifying the SDU 810-6 into the second group 870, the electronic device 101 may classify the SDU 800-7 into the first group 860. For example, based on obtaining an SDU 810-7 including auxiliary data for outputting the seventh audio after classifying the SDU 800-7 into the first group 860, the electronic device 101 may classify the SDU 810-7 into the second group 870. The data in the SDU 810-7 may be usable to apply an effect to the seventh audio.

For example, based on obtaining an SDU 800-8 including mandatory data for outputting eighth audio following the seventh audio after classifying the SDU 810-7 into the second group 870, the electronic device 101 may classify the SDU 800-8 into the first group 860. For example, based on obtaining an SDU 810-8 including auxiliary data for outputting the eighth audio after classifying the SDU 800-8 into the first group 860, the electronic device 101 may classify the SDU 810-8 into the second group 870. The data in the SDU 810-8 may be usable to apply an effect to the fifth audio.

For example, based on obtaining an SDU 800-9 including mandatory data for outputting ninth audio following the eighth audio after classifying the SDU 810-8 into the second group 870, the electronic device 101 may classify the SDU 800-9 into the first group 860. For example, based on obtaining an SDU 820-3 including auxiliary data for outputting each of the seventh audio to the ninth audio after classifying the SDU 800-9 into the first group 860, the electronic device 101 may classify the SDU 820-3 into the third group 880. For example, the data in the SDU 820-3 may be usable to apply an effect to each of the seventh audio to the ninth audio. For example, based on obtaining an SDU 810-9 including auxiliary data for outputting the ninth audio after classifying the SDU 820-3 into the third group 880, the electronic device 101 may classify the SDU 810-9 into the second group 870. The data in the SDU 810-9 may be usable to apply an effect to the ninth audio.

In an embodiment, a CIS (e.g., a first CIS 211) for the first group 860, CISs (e.g., a second CIS 221 and a third CIS 222) for the second group, and CISs (e.g., a fourth CIS 231 and a fifth CIS 232) for the third group may be different from each other.

FIG. 9 illustrates an exemplary method of storing SDUs in a buffer.

Referring to FIG. 9, an electronic device 101 may have a buffer for each of the plurality of groups. For example, as in a state 900, the electronic device 101 may have a buffer 910 for a first group 860 among the plurality of groups, a buffer 920 for the second group 870 among the plurality of groups, and a buffer 930 for the third group 880 among the plurality of groups.

For example, the buffer 910 may be used to (at least temporarily) store SDUs classified into the first group 860. For example, the SDUs classified into the first group 860 may be sequentially stored in the buffer 910. For example, an SDU 800-1 to an SDU 800-9 may be stored in the buffer 910 according to an order in which the SDU 800-1 to the SDU 800-9 are obtained (or an order in which the SDU 800-1 to the SDU 800-9 are classified into the first group 860). For example, an SDU stored first in the buffer 910 may be read first by the electronic device 101 (or communication circuitry 390) (or a processor 120). For example, the SDU 800-1 stored in the buffer 910 may be read by the electronic device 101 (or the communication circuitry 390) (or the processor 120) in preference to an SDU 800-2 to the SDU 800-9 stored in the buffer 910.

For example, the buffer 920 may be used to (at least temporarily) store SDUs classified into the second group 870. For example, the SDUs classified into the second group 870 may be sequentially stored in the buffer 920. For example, an SDU 810-1 to an SDU 810-9 may be stored in the buffer 920 according to an order in which the SDU 810-1 to the SDU 810-9 are obtained (or an order in which the SDU 810-1 to the SDU 810-9 are classified into the second group 870). For example, an SDU stored first in the buffer 920 may be read first by the electronic device 101 (or communication circuitry 390) (or a processor 120). For example, the SDU 810-1 stored in the buffer 920 may be read by the electronic device 101 (or the communication circuitry 390) (or the processor 120) in preference to an SDU 810-2 to the SDU 810-9 stored in the buffer 920.

For example, the buffer 930 may be used to (at least temporarily) store SDUs classified into the third group 880. For example, the SDUs classified into the third group 880 may be sequentially stored in the buffer 930. For example, an SDU 820-1 to an SDU 820-3 may be stored in the buffer 930 according to an order in which the SDU 820-1 to the SDU 820-3 are obtained (or an order in which the SDU 820-1 to the SDU 820-3 are classified into the third group 880). For example, an SDU stored first in the buffer 930 may be read first by the electronic device 101 (or communication circuitry 390) (or a processor 120). For example, the SDU 820-1 stored in the buffer 930 may be read by the electronic device 101 (or the communication circuitry 390) (or the processor 120) in preference to an SDU 820-2 to the SDU 820-3 stored in the buffer 930.

The electronic device 101 may have one buffer (or a single buffer). For example, the electronic device 101 may have a buffer 960, as in a state 980.

For example, according to an order in which SDUs are obtained, the electronic device 101 may store the SDUs in the buffer 960. For example, the electronic device 101 may store the SDU 800-1 to the SDU 800-9, the SDU 820-1 to an SDU 820-3, and the SDU 810-1 to the SDU 810-9 in the buffer 960 in an order indicated by the chart 800 of FIG. 5. For example, an SDU stored first in the buffer 960 may be read first by the electronic device 101 (or the communication circuitry 390) (or the processor 120). For example, the SDU 800-1 stored in the buffer 960 may be read by the electronic device 101 (or the communication circuitry 390) (or the processor 120) in preference to remaining SDUs stored in the buffer 960.

FIG. 10A is a diagram representing an example of data transmitted according to CIG events based on determined information. A horizontal axis of FIG. 10A may represent time. An order between a first CIG event, a second CIG event, and a third CIG event of FIG. 10A may be changed.

In FIG. 10A, four sub events may be utilized for a transmission of a packet 1000-1 or 1000-2 in the first CIG event, four sub events may be utilized for a transmission of a packet 1010-1 or 1010-2 in the second CIG event, and two sub events may be utilized for a transmission of a packet 1020-1 or 1020-2 in the third CIG event. Referring to FIG. 10A, the packet 1000-1 or 1000-2 transmitted through the first CIG event (or a CIS event of the first CIG event) may have four transmission (or retransmission) opportunities. The packet 1010-1 or 1010-2 transmitted through the second CIG event (or a CIS event of the second CIG event) may have two transmission (or retransmission) opportunities. The packet 1020-1 or 1020-2 transmitted through the third CIG event (or a CIS event of the third CIG event) may have one transmission (or retransmission) opportunity. However, it is not limited thereto. According to a wireless environment and/or a group in which a packet is classified, two or more sub events may be utilized for a transmission of packets.

In an embodiment, an electronic device 101 may transmit (or deliver), through communication circuitry 390, the packet 1000-1 including mandatory data for outputting audio through a CIS event in the first CIG event (over the air) during the first CIG event. In an embodiment, the first CIG event may be related to the CIG 210 of FIG. 2, and the CIS event in the first CIG event may be related to the first CIS 211 of FIG. 2.

In an embodiment, an external electronic device 202 may obtain (or receive), through communication circuitry 392, the packet 1000-1 delivered (or transmitted) through the CIS event in the first CIG event. In an embodiment, the external electronic device 202 may transmit (or deliver) a response 1011 (e.g., ACK or NACK) indicating whether the packet 1000-1 is obtained (or received) through the CIS event in the first CIG event. For example, the external electronic device 202 may transmit (or deliver), to an external electronic device 201, the response 1011 indicating whether the packet 1000-1 is obtained (or received) through the CIS event (e.g., the first CIS 211) in the first CIG event, through a communication link (e.g., the communication link 240 of FIG. 2).

In an embodiment, the external electronic device 201 may obtain (or receive), through communication circuitry 391, the packet 1000-1 delivered (or transmitted) through the CIS event (e.g., the first CIS 211) in the first CIG event. In an embodiment, the external electronic device 201 may transmit (or deliver) a response 1021 (e.g., ACK or NACK) indicating whether the packet 1000-1 is obtained (or received) through the CIS event (e.g., the first CIS 211) in the first CIG event. For example, the external electronic device 201 may directly transmit (or deliver), to the electronic device 101 through the CIS event (e.g., the first CIS 211) in the first CIG event, the response 1021 (e.g., ACK) indicating whether the packet 1000-1 is obtained (or received) through the CIS event (e.g., first CIS 211) in the first CIG event. For example, the external electronic device 201 may directly transmit (or deliver) the response 1021 (e.g., ACK or NACK) to the electronic device 101 through the CIS event in the first CIG event, based on whether the response 1011 from the external electronic device 202 is received and whether the packet 1000-1 is obtained. For example, in a case that at least one external electronic device of the external electronic device 201 or the external electronic device 202 does not obtain (or receive) the packet 1000-1, the external electronic device 201 may transmit (or deliver), to the electronic device 101, the response 1021 (e.g., NACK) indicating that the packet 1000-1 has not been received. For example, in a case that the external electronic device 201 and the external electronic device 202 obtain (or receive) the packet 1000-1, the external electronic device 201 may transmit (or deliver), to the electronic device 101, the response 1021 (e.g., ACK) indicating that the packet 1000-1 has been received.

In an embodiment, the electronic device 101 may determine a next packet to be transmitted based on (or in response to) the response 1011 from the external electronic device 201. For example, in a case that the external electronic device 201 transmits a packet 1021 (e.g., NACK) indicating that the packet 1000-1 has not been obtained (or received), the electronic device 201 may retransmit the packet 1000-1 through a subsequent sub event of the CIS event (e.g., the first CIS 211) in the first CIG event. In an embodiment, the electronic device 101 may retransmit the packet 1000-1 until time usable for the transmission (and/or one or more retransmissions) of the packet 1000-1 having a first priority (e.g., a max transport latency (MTL), flush timeout, and/or the maximum number (or count) of retransmissions). In an embodiment, the electronic device 101 may retransmit the packet 1000-1 up to the number of sub events (e.g., four) usable for the transmission (and/or the one or more retransmissions) of the packet 1000-1 having the first priority.

For example, in a case that the external electronic device 201 transmits the packet 1021 (e.g., ACK) indicating that the packet 1000-1 has been obtained (or received), the electronic device 101 may transmit the packets 1010-1 and 1010-2 through a CIS event (e.g., a second CIS 221 or a third CIS 222) of a CIG event (e.g., the second CIG event) following the first CIG event. For example, in a case that the external electronic device 201 transmits the packet 1021 (e.g., ACK) indicating that the packet 1000-1 has been obtained (or received), the electronic device 101 may terminate the first CIG event and transmit the packets 1010-1 and 1010-2 through the CIS event (e.g., the second CIS 221 or the third CIS 222) of the CIG event (e.g., the second CIG event) following the first CIG event.

In an embodiment, a response regarding whether the packet 1000-1 is transmitted, and the packet 1000-1 is received may be performed in a first sub interval for a sub event.

In an embodiment, the electronic device 101 may transmit (or deliver), through the communication circuitry 390, the packet 1010-1 including optional data for outputting audio through the CIS event in the second CIG event during the second CIG event. In an embodiment, the second CIG event may be related to the CIG 220 of FIG. 2, and the CIS event in the second CIG event may be related to the second CIS 221 and the third CIS 222 of FIG. 2. The external electronic device 201 may be related to the second CIS 221, and the external electronic device 202 may be related to the third CIS 222.

In an embodiment, the external electronic device 201 may obtain (or receive), through the communication circuitry 391, the packet 1010-1 delivered (or transmitted) through the CIS event (e.g., the second CIS 221) in the second CIG event. In an embodiment, the external electronic device 201 may directly transmit (or deliver), to the electronic device 101 through the CIS event (e.g., the second CIS 221) in the second CIG event, a response 1023 (e.g., ACK or NACK) indicating whether the packet 1010-1 is obtained (or received) through the CIS event (e.g., the second CIS 221) in the second CIG event.

In an embodiment, the electronic device 101 may determine a next packet to be transmitted based on (or in response to) the response 1023 from the external electronic device 201. For example, in a case that the external electronic device 201 transmits the packet 1021 (e.g., NACK) indicating that the packet 1010-1 has not been obtained (or received), the electronic device 101 may retransmit the packet 1010-1 through a subsequent sub event of the CIS event (e.g., the second CIS 221) in the second CIG event. In an embodiment, the electronic device 101 may retransmit the packet 1010-1 until time usable for the transmission (and/or one or more retransmissions) of the packet 1010-1 having a second priority (e.g., a max transport latency (MTL), flush timeout, and/or the maximum number (or count) of retransmissions). In an embodiment, the electronic device 101 may retransmit the packet 1010-1 up to the number of sub events (e.g., two) usable for the transmission (and/or the one or more retransmissions) of the packet 1010-1 having the second priority.

For example, in a case that the external electronic device 201 transmits a packet 1023 (e.g., ACK) indicating that the packet 1010-1 has been obtained (or received), the electronic device 201 may transmit the packets 1010-2 through a next CIS event (e.g., the third CIS 222) in the second CIG event. For example, in a case that the external electronic device 101 transmits the packet 1023 (e.g., ACK) indicating that the packet 1010-1 has been obtained (or received), the electronic device 101 may terminate the CIS event (e.g., the second CIS 221) of the second CIG event for transmitting the packet 1010-1 and transmit the packet 1010-2 through the subsequent CIS event (e.g., the third CIS 222).

In an embodiment, a response regarding whether the packet 1010-1 is transmitted, and the packet 1010-1 is received may be performed in a second sub interval for a sub event. In an embodiment, the second sub interval of the sub event for the packet 1010-1 may be shorter than the first sub interval of the sub event for the packet 1000-1.

In an embodiment, the electronic device 101 may transmit (or deliver), through the communication circuitry 390, the packet 1010-2 including optional data for outputting audio through the CIS event in the second CIG event during the second CIG event. In an embodiment, the second CIG event may be related to the CIG 220 of FIG. 2, and the CIS event in the second CIG event may be related to the second CIS 221 and the third CIS 222 of FIG. 2. The external electronic device 201 may be related to the second CIS 221, and the external electronic device 202 may be related to the third CIS 222.

In an embodiment, the external electronic device 202 may obtain (or receive), through the communication circuitry 392, the packet 1010-2 delivered (or transmitted) through the CIS event (e.g., the third CIS 222) in the second CIG event. In an embodiment, the external electronic device 202 may directly transmit (or deliver), to the electronic device 101 through the CIS event (e.g., the third CIS 222) in the second CIG event, a response 1013 (e.g., ACK) indicating whether the packet 1010-2 is obtained (or received) through the CIS event (e.g., the third CIS 222) in the second CIG event.

In an embodiment, the electronic device 101 may determine a next packet to be transmitted based on (or in response to) the response 1013 from the external electronic device 202. For example, in a case that the external electronic device 202 transmits the packet 1021 (e.g., NACK) indicating that the packet 1010-2 has not been obtained (or received), the electronic device 101 may retransmit the packet 1010-2 through a subsequent sub event of the CIS event (e.g., the third CIS 222) in the second CIG event. In an embodiment, the electronic device 101 may retransmit the packet 1010-2 until time usable for the transmission (and/or one or more retransmissions) of the packet 1010-2 having a second priority (e.g., a max transport latency (MTL), flush timeout, and/or the maximum number (or count) of retransmissions). In an embodiment, the electronic device 101 may retransmit the packet 1010-2 up to the number of sub events (e.g., two) usable for the transmission (and/or the one or more retransmissions) of the packet 1010-2 having the second priority.

For example, in a case that the external electronic device 201 transmits a packet 1013 (e.g., ACK) indicating that the packet 1010-2 has been obtained (or received), the electronic device 101 may transmit the packets 1020-1 and 1020-2 through a CIS event (e.g., a fourth CIS 231 or a fifth CIS 232) of a CIG event (e.g., the third CIG event) following the second CIG event. For example, in a case that the external electronic device 201 transmits the packet 1013 (e.g., ACK) indicating that the packet 1010-2 has been obtained (or received), the electronic device 101 may terminate the CIS event of the second CIG event for transmitting the packet 1010-2 and transmit the packets 1020-1 and 1020-2 through the CIS event (e.g., the fourth CIS 231 or the fifth CIS 232) of the CIG event (e.g., the third CIG event) following the second CIG event.

In an embodiment, a response regarding whether the packet 1010-2 is transmitted, and the packet 1010-2 is received may be performed in a second sub interval for a sub event. In an embodiment, the second sub interval of a sub event for the packet 1010-2 may be shorter than a first sub interval of a sub event for the packet 1000-2.

In an embodiment, the electronic device 101 may transmit (or deliver), through the communication circuitry 390, the packet 1020-1 including optional data for outputting audio through the CIS event in the third CIG event during the third CIG event. In an embodiment, the third CIG event may be related to the CIG 230 of FIG. 2, and the CIS event in the third CIG event may be related to the fourth CIS 231 and the fifth CIS 232 of FIG. 2. The external electronic device 201 may be related to the fourth CIS 231, and the external electronic device 202 may be related to the fifth CIS 232.

In an embodiment, the external electronic device 201 may obtain (or receive), through the communication circuitry 391, the packet 1020-1 delivered (or transmitted) through the CIS event (e.g., the fourth CIS 231) in the third CIG event. In an embodiment, the external electronic device 201 may directly transmit (or deliver), to the electronic device 101 through the CIS event (e.g., the fourth CIS 231) in the third CIG event, a response 1025 (e.g., ACK or NACK) indicating whether the packet 1020-1 is obtained (or received) through the CIS event (e.g., the fourth CIS 231) in the third CIG event.

In an embodiment, the electronic device 101 may determine a next packet to be transmitted based on the number (e.g., 1) of sub events determined for the transmission of the packet 1020-1. For example, in a case that the external electronic device 201 transmits the packet 1021 (e.g., NACK) indicating that the packet 1020-1 has not been obtained (or received), the electronic device 101 may transmit the packet 1020-2 through another CIS event (e.g., the fifth CIS 232) in the third CIG event.

In an embodiment, a response regarding whether the packet 1020-1 is transmitted, and the packet 1020-1 is received may be performed in a third sub interval for a sub event. In an embodiment, the third sub interval of the sub event for the packet 1020-1 may be shorter than the second sub interval of the sub event for the packet 1010-1. However, it is not limited thereto.

In an embodiment, the electronic device 101 may transmit (or deliver), through the communication circuitry 390, the packet 1020-2 including optional data for outputting audio through the CIS event in the third CIG event during the third CIG event. In an embodiment, the third CIG event may be related to the CIG 230 of FIG. 2, and the CIS event in the third CIG event may be related to the fourth CIS 231 and the fifth CIS 232 of FIG. 2. The external electronic device 201 may be related to the fourth CIS 231, and the external electronic device 202 may be related to the fifth CIS 232.

In an embodiment, the external electronic device 202 may obtain (or receive), through the communication circuitry 392, the packet 1020-2 delivered (or transmitted) through the CIS event (e.g., the fifth CIS 232) in the third CIG event. In an embodiment, the external electronic device 202 may directly transmit (or deliver), to the electronic device 101 through the CIS event (e.g., the fifth CIS 232) in the third CIG event, a response 1015 (e.g., ACK) indicating whether the packet 1020-2 is obtained (or received) through the CIS event (e.g., the fifth CIS 232) in the third CIG event.

In an embodiment, the electronic device 101 may determine a next packet to be transmitted based on the number (e.g., 1) of sub events determined for the transmission of the packet 1020-2. For example, in a case that the external electronic device 202 transmits the packet 1021 (e.g., NACK) indicating that the packet 1020-2 has not been obtained (or received), The electronic device 101 may transmit a packet 10-0-2 through another CIG event (e.g., the first CIG event) following the third CIG event..

In an embodiment, a response regarding whether the packet 1020-2 is transmitted, and the packet 1020-2 is received may be performed in a third sub interval for a sub event. In an embodiment, the third sub interval of the sub event for the packet 1020-2 may be shorter than the second sub interval of the sub event for the packet 1010-1. However, it is not limited thereto.

In an embodiment, the electronic device 101 may transmit (or deliver), through the communication circuitry 390, the packet 1000-2 including mandatory data for outputting audio after a first ISO interval through a CIS event in the first CIG event (over the air) during the first CIG event. In an embodiment, the first CIG event may be related to the CIG 210 of FIG. 2, and the CIS event in the first CIG event may be related to the first CIS 211 of FIG. 2.

In an embodiment, the external electronic device 202 may obtain (or receive), through the communication circuitry 392, the packet 1000-2 delivered (or transmitted) through the CIS event in the first CIG event. In an embodiment, the external electronic device 202 may transmit (or deliver) a response 1017 (e.g., ACK or NACK) indicating whether the packet 1000-2 is obtained (or received) through the CIS event (e.g., the first CIS 211) in the first CIG event. For example, the external electronic device 202 may transmit (or deliver), to the external electronic device 201, the response 1017 indicating whether the packet 1000-2 is obtained (or received) through the CIS event (e.g., the first CIS 211) in the first CIG event, through the communication link (e.g., the communication link 240 of FIG. 2).

In an embodiment, the external electronic device 201 may obtain (or receive), through communication circuitry 391, the packet 1000-2 delivered (or transmitted) through the CIS event (e.g., the first CIS 211) in the first CIG event. In an embodiment, the external electronic device 201 may transmit (or deliver) a response 1027 (e.g., ACK or NACK) indicating whether the packet 1000-2 is obtained (or received) through the CIS event (e.g., the first CIS 211) in the first CIG event. For example, the external electronic device 201 may directly transmit (or deliver), to the electronic device 101 through the CIS event (e.g., the first CIS 211) in the first CIG event, the response 1027 (e.g., ACK) indicating whether the packet 1000-2 is obtained (or received) through the CIS event (e.g., first CIS 211) in the first CIG event. For example, the external electronic device 201 may directly transmit (or deliver) the response 1027 (e.g., ACK or NACK) to the electronic device 101 through the CIS event (e.g., the first CIS 211) in the first CIG event, based on whether the response 1017 from the external electronic device 202 is received and whether the packet 1000-2 is obtained. For example, in a case that at least one external electronic device of the external electronic device 201 or the external electronic device 202 does not obtain (or receive) the packet 1000-2, the external electronic device 201 may transmit (or deliver), to the electronic device 101, the response 1027 (e.g., NACK) indicating that the packet 1000-2 has not been received. For example, in a case that the external electronic device 201 and the external electronic device 202 obtain (or receive) the packet 1000-2, the external electronic device 201 may transmit (or deliver), to the electronic device 101, the response 1027 (e.g., ACK) indicating that the packet 1000-2 has been received.

In an embodiment, the electronic device 101 may determine a next packet to be transmitted based on (or in response to) the response 1017 from the external electronic device 201. For example, in a case that the external electronic device 201 transmits a packet 1027 (e.g., NACK) indicating that the packet 1000-2 has not been obtained (or received), the electronic device 201 may retransmit the packet 1000-2 through a subsequent sub event of the CIS event (e.g., the first CIS 211) in the first CIG event. In an embodiment, the electronic device 101 may retransmit the packet 1000-2 until time usable for the transmission (and/or one or more retransmissions) of the packet 1000-2 having a first priority (e.g., a max transport latency (MTL), flush timeout, and/or the maximum number (or count) of retransmissions). In an embodiment, the electronic device 101 may retransmit the packet 1000-2 up to the number of sub events (e.g., four) usable for the transmission (and/or the one or more retransmissions) of the packet 1000-2 having the first priority.

For example, in a case that the external electronic device 201 transmits the packet 1021 (e.g., ACK) indicating that the packet 1000-1 has been obtained (or received), the electronic device 101 may transmit packets through a CIS event of a CIG event (e.g., the second CIG event or the third CIG event) following the first CIG event. For example, in a case that the external electronic device 201 transmits the packet 1021 (e.g., ACK) indicating that the packet 1000-1 has been obtained (or received), the electronic device 101 may terminate the first CIG event and transmit packets through the CIS event of the CIG event (e.g., the second CIG event or the third CIG event) following the first CIG event.

In an embodiment, a response regarding whether the packet 1000-2 is transmitted, and the packet 1000-2 is received may be performed in the first sub interval for the sub event.

As described above, the electronic device 101 may reduce a resource required to transmit data to each of the external electronic devices 201 and 202 by transmitting mandatory data (or common data) to the external electronic devices 201 and 202 in a CIS event.

FIG. 10B is a diagram representing an example of data transmitted according to CIG events based on determined information. A horizontal axis of FIG. 10B may represent time. An order between a first CIG event, a second CIG event, and a third CIG event of FIG. 10B may be changed.

In FIG. 10B, four sub events may be utilized for a transmission of a packet 1000-1 or 1000-2 in the first CIG event, four sub events may be utilized for a transmission of a packet 1010-1 or 1010-2 in the second CIG event, and two sub events may be utilized for a transmission of a packet 1020-1 or 1020-2 in the third CIG event. Referring to FIG. 10B, the packet 1000-1 or 1000-2 transmitted through the first CIG event (or a CIS event of the first CIG event) may have four transmission (or retransmission) opportunities. The packet 1010-1 or 1010-2 transmitted through the second CIG event (or a CIS event of the second CIG event) may have two transmission (or retransmission) opportunities. The packet 1020-1 or 1020-2 transmitted through the third CIG event (or a CIS event of the third CIG event) may have one transmission (or retransmission) opportunity. However, it is not limited thereto. According to a wireless environment and/or a group in which a packet is classified, two or more sub events may be utilized for a transmission of packets.

Referring to FIG. 10B, compared to FIG. 10A, an external electronic device 202 may directly transmit, to an electronic device 101, a response 1011 indicating whether the packet 1000-1 is obtained (or received) through a CIS event (e.g., a first CIS 211) in the first CIG event, other than a communication link (e.g., the communication link 240 of FIG. 2).

Accordingly, the external electronic device 202 may not transmit, to an external electronic device 201, the response indicating whether the packet 1000-1 of the external electronic device 202 is obtained (or received) through the communication link (e.g., the communication link 240 of FIG. 2). Accordingly, the external electronic device 201 may not obtain the response indicating whether the packet 1000-1 of the external electronic device 202 is obtained (or received) through the communication link (e.g., the communication link 240 of FIG. 2). Therefore, the external electronic device 201 may directly transmit (or deliver), to the electronic device 101, a response 1021 indicating whether its own packet 1000-1 is obtained (or received).

As described above, the electronic device 101 may reduce a resource required to transmit data to each of the external electronic devices 201 and 202 by transmitting mandatory data (or common data) to the external electronic devices 201 and 202 in a CIS event.

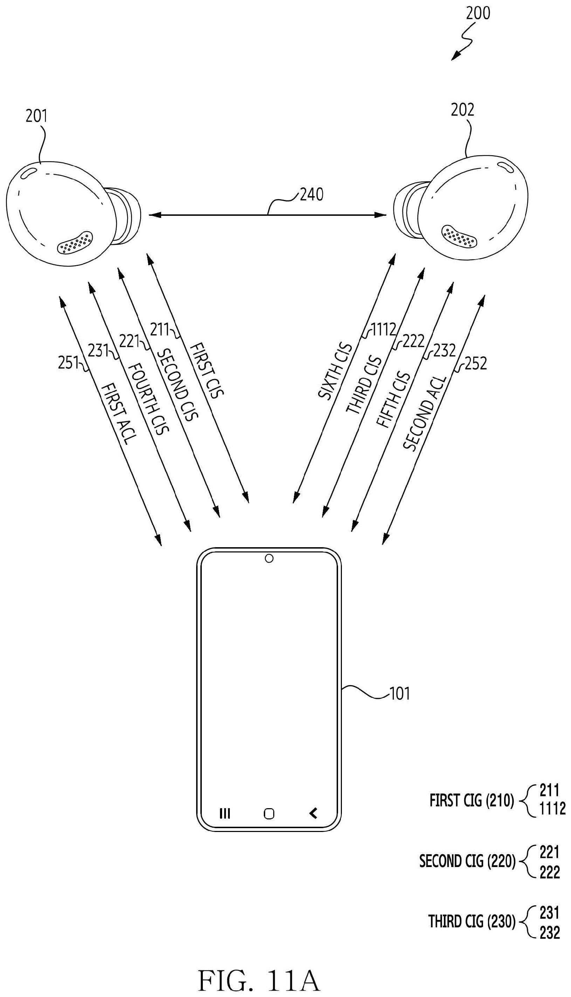

FIG. 11A illustrates an example of a wireless environment including an electronic device and an external electronic device.

Referring to FIG. 11A, the wireless environment may include an electronic device 101, an external electronic device 201, and an external electronic device 202.

The wireless environment of FIG. 11A, compared to the wireless environment of FIG. 2, may be in a state in which a sixth CIS 1112 is generated in a first CIG 210. For example, the electronic device 101 may further generate an additional CIS (e.g., the sixth CIS 1112) for transmitting packets having a first priority. For example, the electronic device 101 may generate the first CIG 210 including CISs 211 and 1112 respectively corresponding to the external electronic device 201 or the external electronic devices 202.

In an embodiment, the electronic device 101 may transmit a communication parameter related to the first CIS 211 of the first CIG 210 to the external electronic device 201 through a first ACL 251 related to the first CIS 211 of the first CIG 210. In an embodiment, the electronic device 101 may transmit, to the external electronic device 201, mandatory data for a right channel through a CIS event related to the first CIS 211 of the first CIG 210. In an embodiment, the electronic device 101 may receive, from the external electronic device 201, a response for the mandatory data for the right channel through the CIS event related to the first CIS 211 of the first CIG 210.

In an embodiment, the electronic device 101 may transmit, to the external electronic device 202, a communication parameter related to the sixth CIS 1112 of the first CIG 210 through a second ACL 252 related to the sixth CIS 1112 of the first CIG 210. In an embodiment, the electronic device 101 may transmit, to the external electronic device 202, mandatory data for a left channel through a CIS event related to the sixth CIS 1112 of the first CIG 210. In an embodiment, the electronic device 101 may receive, from the external electronic device 202, a response for the mandatory data for the left channel through the CIS event related to the sixth CIS 1112 of the first CIG 210.

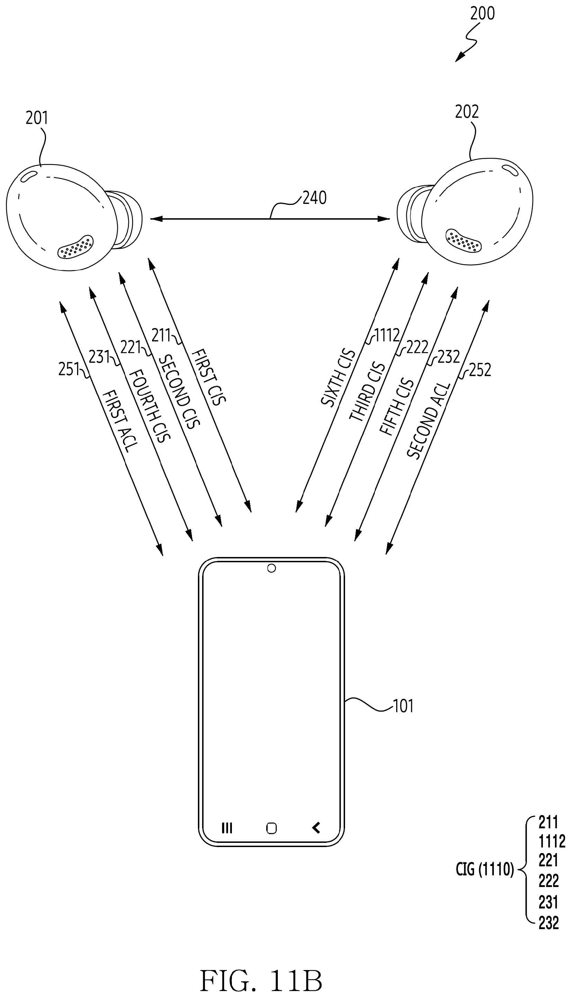

FIG. 11B illustrates an example of a wireless environment including an electronic device and an external electronic device.

Referring to FIG. 11B, the wireless environment may include an electronic device 101, an external electronic device 201, and an external electronic device 202.

The wireless environment of FIG. 11B, compared to the wireless environment of FIG. 2, may be in a state in which a plurality of CISs 211, 221, 222, 231, 232, and 1112 are generated in a CIG 1110. For example, the electronic device 101 may generate the plurality of CISs 211, 221, 222, 231, 232, and 1112 in the CIG 1110 through different communication parameters. For example, some CISs among the plurality of CISs 211, 221, 222, 231, 232, and 1112 may have different communication parameters. For example, some CISs among the plurality of CISs 211, 221, 222, 231, 232, and 1112 may have different ISO intervals. For example, an ISO interval of the CISs 211 and 1112 for a packet of a first priority among the plurality of CISs 211, 221, 222, 231, 232, and 1112 may be shorter than an ISO interval of the CISs 221 and 222 for a packet of a second priority among the plurality of CISs 211, 221, 222, 231, 232, and 1112.

In an embodiment, the electronic device 101 may transmit, to the external electronic device 201, a communication parameter related to the plurality of CISs 211, 221, and 231 of the CIG 1110 through a first ACL 251 related to the plurality of CISs 211, 221, and 231 of the CIG 1110. In an embodiment, the electronic device 101 may transmit, to the external electronic device 201, mandatory data for a right channel through a CIS event related to the CIS 211 of the CIG 1110. In an embodiment, the electronic device 101 may transmit, to the external electronic device 201, optional data for the right channel through a CIS event related to the CIS 221 or the CIS 231 of the CIG 1110. In an embodiment, the electronic device 101 may receive, from the external electronic device 201, a response for data (e.g., the mandatory data or the optional data) for the right channel through a CIS event related to the plurality of CISs 211, 221, and 231 of the CIG 1110.

In an embodiment, the electronic device 101 may transmit, to the external electronic device 202, a communication parameter related to the plurality of CISs 222, 232, and 1112 of the CIG 1110 through a second ACL 252 related to the plurality of CISs 222, 232, and 1112 of the CIG 1110. In an embodiment, the electronic device 101 may transmit, to the external electronic device 202, mandatory data for a left channel through a CIS event related to the CIS 1112 of the CIG 1110. In an embodiment, the electronic device 101 may transmit optional data for the left channel to the external electronic device 202 through a CIS event related to the CIS 222 or the CIS 232 of the CIG 1110. In an embodiment, the electronic device 101 may receive, from the external electronic device 202, a response for data (e.g., the mandatory data or the optional data) for the left channel through a CIS event related to the plurality of CISs 222, 232, and 1112 of the CIG 1110.

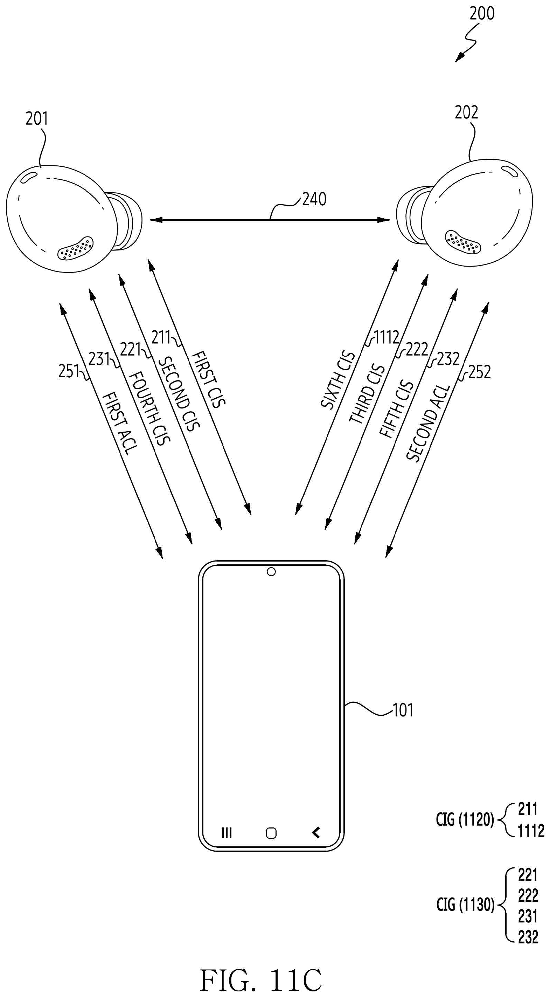

FIG. 11C illustrates an example of a wireless environment including an electronic device and an external electronic device.

Referring to FIG. 11C, the wireless environment may include an electronic device 101, an external electronic device 201, and an external electronic device 202.

The wireless environment of FIG. 11C, compared to the wireless environment of FIG. 2, may be in a state in which a plurality of CISs 211, 221, 222, 231, 232, and 1112 are generated in a plurality of CIGs 1120 and 1130. For example, the electronic device 101 may generate the plurality of CISs 211, 221, 222, 231, 232, and 1112 in the plurality of CIGs 1120 and 1130 through different communication parameters. For example, communication parameters between the plurality of CISs 211 and 1112 included in the CIG 1120 may be the same as each other or different from each other. For example, communication parameters between the plurality of CISs 221, 222, 231, and 232 included in the CIG 1130 may be the same as each other or different from each other.

In an embodiment, the electronic device 101 may transmit, to the external electronic device 201, a communication parameter related to the CIS 211 of the CIG 1120 through a first ACL 251 related to the CIS 211 of the CIG 1120. In an embodiment, the electronic device 101 may transmit, to the external electronic device 201, a communication parameter related to the plurality of CISs 221 and 231 of the CIG 1130 through the first ACL 251 related to the plurality of CISs 221 and 231 of the CIG 1120. In an embodiment, the electronic device 101 may transmit, to the external electronic device 201, mandatory data for a right channel through a CIS event related to the CIS 211 of the CIG 1120. In an embodiment, the electronic device 101 may transmit, to the external electronic device 201, optional data for the right channel through a CIS event related to the CIS 221 or the CIS 231 of the CIG 1130.

In an embodiment, the electronic device 101 may transmit, to the external electronic device 202, a communication parameter related to the CIS 1112 of the CIG 1120 through a second ACL 252 related to the CIS 1112 of the CIG 1120. In an embodiment, the electronic device 101 may transmit, to the external electronic device 201, a communication parameter related to the plurality of CISs 222 and 232 of the CIG 1130 through the first ACL 251 related to the plurality of CISs 222 and 232 of the CIG 1120. In an embodiment, the electronic device 101 may transmit, to the external electronic device 202, mandatory data for a left channel through a CIS event related to the CIS 1112 of the CIG 1120. In an embodiment, the electronic device 101 may transmit, to the external electronic device 202, optional data for the left channel through a CIS event related to the CIS 222 or the CIS 232 of the CIG 1130.

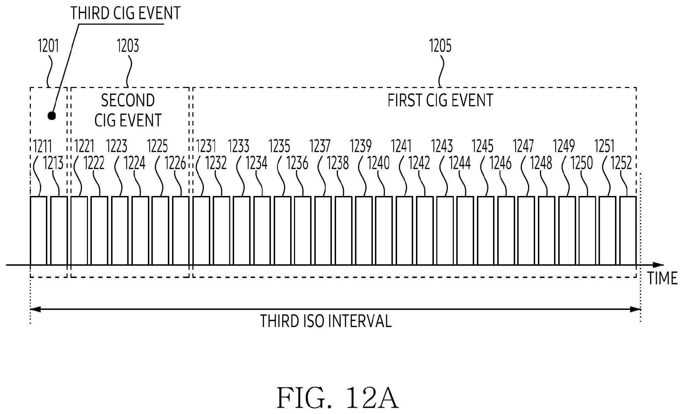

FIG. 12A is a diagram representing an example of CIG events based on determined information.

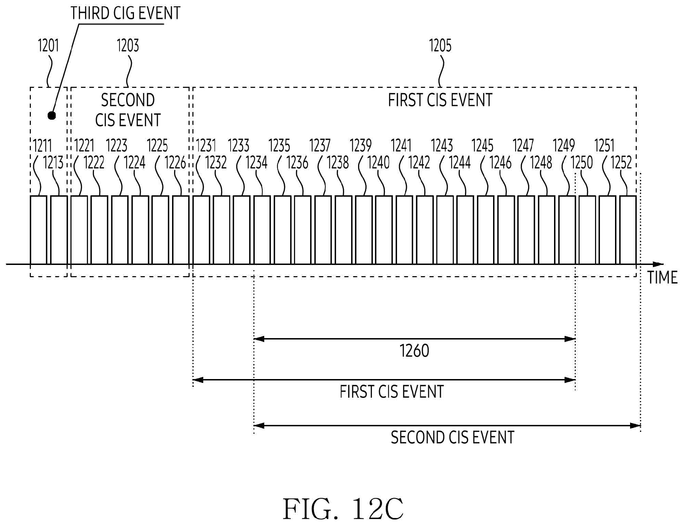

In an embodiment, an electronic device 101 may set NSE and/or flush timeout (FT) to be high with respect to a group with a high priority. In an embodiment, the electronic device 101 may apply hybrid packing, other than general packing (e.g., sequential packing or interleaved packing), with respect to the group with the high priority. The hybrid packing may be described with reference to FIG. 12C.

For example, referring to FIG. 12A, sub events 1231 to 1252 in a first CIG event 1205 may be in a state in which sub events 1231, 1233, 1235, 1237, 1239, 1241, 1243, 1245, 1247, 1249, and 1251 for right core data and sub events 1232, 1234, 1236, 1238, 1240, 1242, 1244, 1246, 1248, 1250, and 1252 for left core data are interleaved-packed.

For example, referring to FIG. 12A, sub events 1221 to 1226 in a second CIG event 1203 may be in a state in which sub events 1221, 1223, and 1225 for right extension data and sub events 1222, 1224, and 1226 for left extension data are interleaved-packed. According to an embodiment, the electronic device 101 may also allocate time periods corresponding to sub events 1223 to 1226 in the second CIG event 1203 to the first CIG event 1205. For example, the electronic device 101 may use the simultaneously allocated sub events 1223 to 1226 for core data with a high priority. For example, in a case the core data with the high priority is not transmitted until a flush timeout, or in a case that sub events for the core data with the high priority are occupied by another task, the electronic device 101 may use the time periods corresponding to the sub events 1223 to 1226 in the second CIG event 1203 for core data related to the first CIG event 1205.

For example, referring to FIG. 12A, sub events 1211 and 1213 in a third CIG event 1201 may be sub events for extension data. For example, the sub events 1211 and 1213 in the third CIG event 1201 may be sub events for left extension data and right extension data having one transmission opportunity. In an embodiment, the electronic device 101 may forgo transmission of the extension data in the sub events 1211 and 1213 for the extension data with a low priority. For example, in a case that power of the electronic device 101 is insufficient (e.g., in a case of being less than or equal to a reference state of charge (SOC)), the electronic device 101 may forgo the transmission of the extension data in the sub events 1211 and 1213 for the extension data with the low priority.

For example, while an audio service is provided, the electronic device 101 may check occurrence of another task having a higher priority than a task for the audio service. For example, the other task may cause interference to the task for the audio service. For example, the other task may include transmitting or receiving a signal on a frequency (or a frequency band) corresponding to a frequency (or a frequency band) of packets for the audio service. For example, the other task may be a task executed through Wi-Fi and/or a task executed through Bluetooth.

For example, in response to detecting the other task having the higher priority than the task for the audio service, the electronic device 101 may allow time periods for sub events of CIGs with a low priority to be occupied by the other task having the higher priority. For example, the electronic device 101 may allow time periods for the sub events 1221 to 1226 in the second CIG event 1203 and/or time periods for the sub events 1211 and 1213 in the third CIG event 1201 to be occupied by the other task having the higher priority.

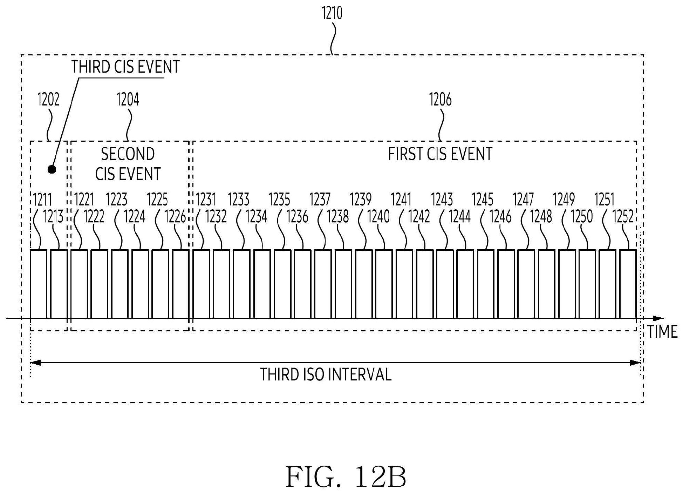

FIG. 12B is a diagram representing an example of CIS events based on determined information.

Compared with FIG. 12A, FIG. 12B may include CIS events 1202, 1204, and 1206 generated by different transmission parameters in a CIG event 1210.

The same algorithm as the CIG events 1201, 1203, and 1205 of FIG. 12A may also be applied to the CIS events 1202, 1204, and 1206 of FIG. 12B.

For example, hybrid packing other than general packing (e.g., sequential packing or interleaved packing) may be applied to the CIS events 1202, 1204, and 1206 of FIG. 12B.

For example, an electronic device 101 may also allocate time periods corresponding to sub events 1223 to 1226 in a second CIS event 1204 to a first CIS event 1206. For example, the electronic device 101 may use the simultaneously allocated sub events 1223 to 1226 for core data with a high priority. For example, in a case the core data with the high priority is not transmitted until a flush timeout, or in a case that sub events for the core data with the high priority are occupied by another task, the electronic device 101 may use the time periods corresponding to the sub events 1223 to 1226 in the second CIS event 1204 for core data related to the first CIS event 1206.

In an embodiment, the electronic device 101 may forgo transmission of extension data in sub events 1211 and 1213 for the extension data with a low priority. For example, in a case that power of the electronic device 101 is insufficient (e.g., in a case of being less than or equal to a reference SOC), the electronic device 101 may forgo the transmission of the extension data in the sub events 1211 and 1213 for the extension data with the low priority.

For example, in response to detecting another task having a higher priority than a task for an audio service, the electronic device 101 may allow time periods for sub events of CISs with a low priority to be occupied by the other task having the higher priority. For example, the electronic device 101 may allow time periods for sub events 1221 to 1226 in the second CIS event 1204 and/or time periods for the sub events 1211 and 1213 in the third CIS event 1202 to be occupied by the other task having the higher priority.

FIG. 12C is a diagram representing an example of CIG events based on determined information.

In an embodiment, an electronic device 101 may set NSE and/or flush timeout (FT) to be high with respect to a group with a high priority. In an embodiment, the electronic device 101 may apply hybrid packing, other than general packing (e.g., sequential packing or interleaved packing), with respect to the group with the high priority. For example, the hybrid packing may be a method in which, after two or more CISs are set to overlap in time with each other, sub events are arranged such that a CIS with a high priority occupies the corresponding period. In an embodiment, the electronic device 101 may dispose CISs of two or more CIGs after minimum time required for a channel change or a transmission/reception mode change (e.g., a time interval between two consecutive packets in a sub event (e.g., T_IFS), or a minimum sub event interval (e.g., T_MSS)).

For example, referring to FIG. 12c, sub events 1231 to 1252 in a first CIG event 1205 may be in a state in which a first CIS event set to occupy sub events 1231 to 1249 for right core data and a second CIS event set to occupy sub events 1234 to 1252 for left core data are hybrid-packed. In FIG. 12C, the sub events 1231 to 1233 may be utilized as sub events for the right core data, the sub events 1250 to 1232 may be utilized as sub events for the left core data, and the sub events 1234 to 1249 overlapping in time with each other in a period 1260 may be utilized as sub events for the right core data and/or the left core data. In an embodiment, the electronic device 101 may allow the overlapping sub events 1234 to 1249 to be occupied by a CIS event of core data with a high priority among the left core data or the right core data.

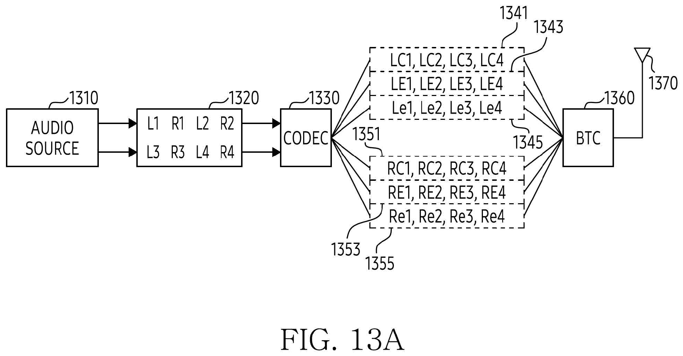

FIG. 13A illustrates an exemplary signal flow for generating SDUs used to generate packets to be transmitted to an external electronic device.

Referring to FIG. 13A, an audio source 1310 may be configured with audio data 1320 for stereophonic sound in which left audio data L1, L2, L3, and L4 and right audio data R1, R2, R3, and R4 are combined.

In an embodiment, the audio data 1320 may be encoded, through a codec 1330, into SDUs LC1, LC2, LC3, LC4, LE1, LE2, LE3, LE4, Le1, Le2, Le3, Le4, RC1, RC2, RC3, RC4, RE1, RE2, RE3, RE4, Re1, Re2, Re3, and Re4 included in a plurality of groups 1341, 1343, 1345, 1351, 1353, and 1355. In an embodiment, the SDUs LC1, LC2, LC3, LC4, RC1, RC2, RC3, and RC4 included in the groups 1341 and 1351 having a first priority may be mandatory data. In an embodiment, the SDUs LE1, LE2, LE3, LE4, RE1, RE2, RE3, and RE4 included in the groups 1343 and 1353 having a second priority may be optional data (e.g., extension data). In an embodiment, the SDUs Le1, Le2, Le3, Le4, Re1, Re2, Re3, and Re4 included in the groups 1343 and 1353 having a third priority may be optional data (e.g., extension data). In an embodiment, the codec 1330 may be included as a portion of a processor 120. In an embodiment, the codec 1330 may be included as a program in memory 130. In an embodiment, the codec 1330 may be included as a portion of communication circuitry 390.

In an embodiment, a Bluetooth chip (or a Bluetooth controller) (BTC) 1360 included in the communication circuitry 290 may convert the SDUs LC1, LC2, LC3, LC4, LE1, LE2, LE3, LE4, Le1, Le2, Le3, Le4, RC1, RC2, RC3, RC4, RE1, RE2, RE3, RE4, Re1, Re2, Re3, and Re4 to a PDU. In an embodiment, the BTC 1360 may transmit, through an antenna 1370, the PDU to external electronic devices 201 and 202 in a CIS event included in a CIG event corresponding to a priority.

In an embodiment, since the audio data 1320 is encoded into data on each of channels without common data, the electronic device 101 may transmit the PDU to the external electronic devices 201 and 202 through the wireless environment as illustrated in FIG. 11A or 11B instead of the wireless environment as illustrated in FIG. 2. For example, the electronic device 101 may transmit a PDU including each of the SDUs RC1, RC2, RC3, and RC4 to the external electronic device 201 through a first CIS 211. For example, the electronic device 101 may transmit a PDU including each of the SDUs LC1, LC2, LC3, and LC4 to the external electronic device 201 through a sixth CIS 1112.

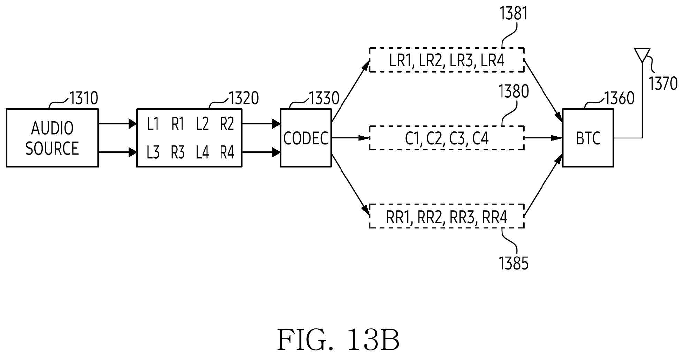

FIG. 13B illustrates an exemplary signal flow for generating SDUs used to generate packets to be transmitted to an external electronic device.

Referring to FIG. 13B, an audio source 1310 may configured with audio data 1320 for stereophonic sound in which left audio data L1, L2, L3, and L4 and right audio data R1, R2, R3, and R4 are combined.

In an embodiment, the audio data 1320 may be encoded, through a codec 1330, into SDUs C1, C2, C3, C4, LR1, LR2, LR3, LR4, RR1, RR2, RR3, and RR4 included in a plurality of groups 1380, 1381, and 1385. In an embodiment, the SDUs C1, C2, C3, and C4 included in the group 1380 having a first priority may be mandatory data (or common data). In an embodiment, the SDUs LR1, LR2, LR3, LR4, RR1, RR2, RR3, and RR4 included in the groups 1381 and 1385 having a second priority may be optional data (e.g., residual data).

In an embodiment, a BTC 1360 may convert the SDUs C1, C2, C3, C4, LR1, LR2, LR3, LR4, RR1, RR2, RR3, and RR4 into a PDU. In an embodiment, the BTC 1360 may transmit, through an antenna 1370, the PDU to external electronic devices 201 and 202 in a CIS event included in a CIG event corresponding to a priority.

In an embodiment, since the audio data 1320 is encoded into common data and data on each of channels, the electronic device 101 may transmit the PDU to the external electronic devices 201 and 202 through a wireless environment as illustrated in FIG. 2. For example, the electronic device 101 may transmit a PDU including each of the SDUs C1, C2, C3, and C4 to the external electronic device 201 and the external electronic device 202 through a first CIS 211. For example, in a case that a PDU including C1 is transmitted (over the air) through the first CIS 211, both the external electronic device 201 and the external electronic device 202 may receive (or obtain) the PDU including the C1. For example, both the external electronic device 201 and the external electronic device 202 may respond to the electronic device 101 through the first CIS 211 whether to receive the PDU including the C1.

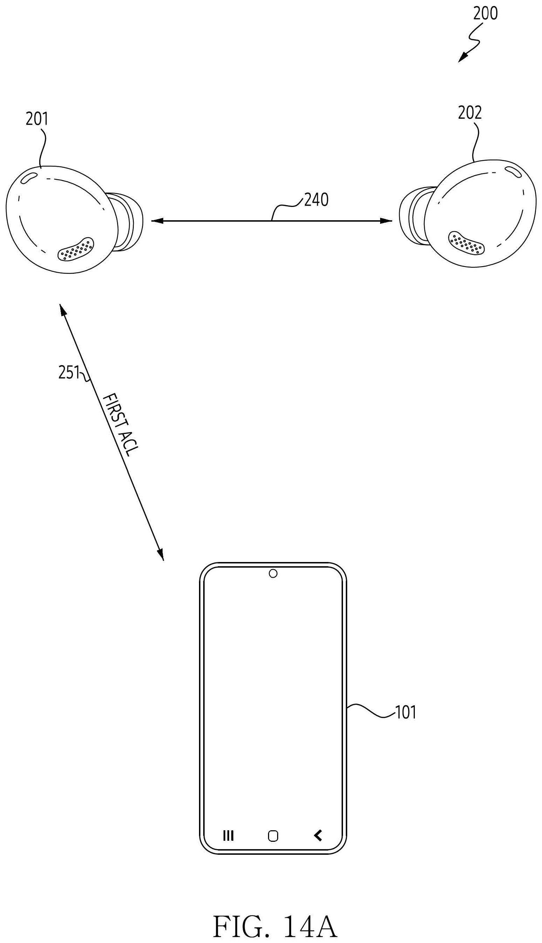

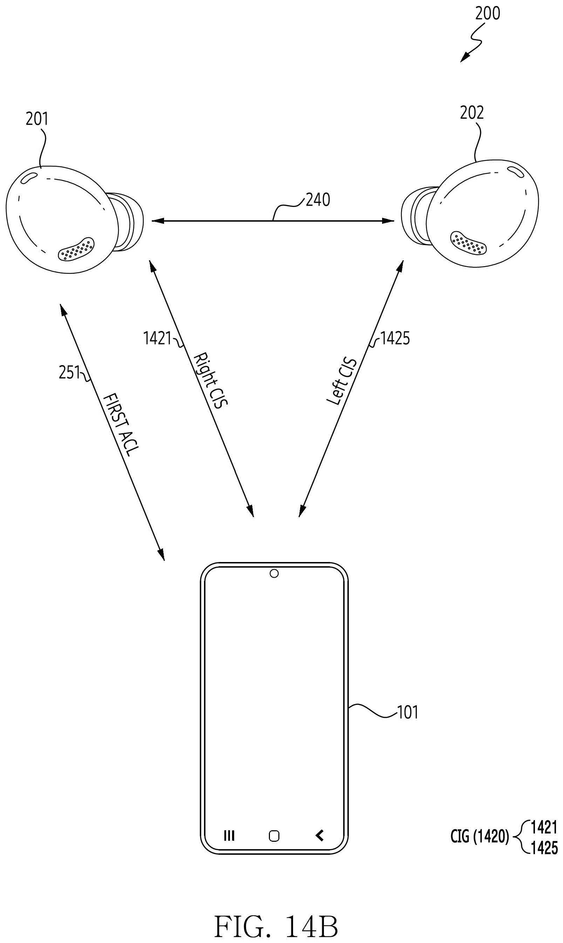

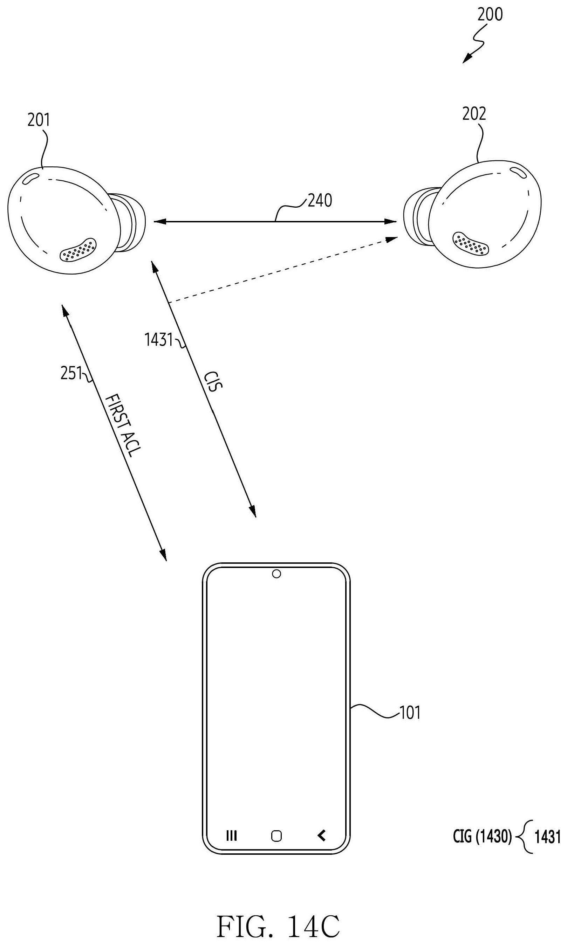

FIG. 14A illustrates an example of a wireless environment including an electronic device and an external electronic device. FIG. 14B illustrates an example of a wireless environment including an electronic device and an external electronic device. FIG. 14C illustrates an example of a wireless environment including an electronic device and an external electronic device.

Referring to FIGS. 14A, 14B, and 14C, the wireless environment may include an electronic device 101, an external electronic device 201, and an external electronic device 202.

The wireless environment of FIG. 14A may be a state in which a communication link (e.g., a first ACL 251) between the electronic device 101 and the external electronic device 201 and a communication link 240 between the external electronic device 201 and the external electronic device 202 are established. In an embodiment, the communication link 240 between the external electronic device 201 and the external electronic device 202 may be an ACL.

In an embodiment, the electronic device 101 may generate one or more CISs (or set a transmission parameter for the one or more CISs). In an embodiment, the electronic device 101 may generate (or set) one or more CISs (or a transmission parameter for the one or more CISs) for transmitting packets for an audio service to the external electronic device 201 and/or the external electronic device 202. In an embodiment, the one or more CISs may be included in a CIG. However, it is not limited thereto.

In an embodiment, the electronic device 101 may transmit one or more CISs (or a transmission parameter for the one or more CISs) for transmitting packets for the audio service through the communication link (e.g., the first ACL 251) between the electronic device 101 and the external electronic device 201. In an embodiment, the one or more CISs may be included in a CIG. However, it is not limited thereto.

In an embodiment, the electronic device 101 may transmit, to the external electronic device 201 through the communication link (e.g., the first ACL 251), a transmission parameter for the communication link (e.g., a CIS) between the electronic device 101 and the external electronic device 201 and/or a transmission parameter for a communication link (e.g., a CIS) between the electronic device 101 and the external electronic device 202.

In an embodiment, the external electronic device 201 may transmit, to the external electronic device 202 through the communication link 240, a transmission parameter for an audio service through the external electronic device 202. For example, a transmission parameter for at least one CIS, among one or more CISs, for transmitting a packet for the external electronic device 202 (e.g., common data of audio for providing stereophonic sound and/or left residual data to be output from a left channel of the audio) may be transmitted to the external electronic device 202 through the communication link 240.

For example, referring to FIG. 14B, the electronic device 101 may generate a CIG 1420 including CISs 1421 and 1425 (or set a transmission parameter for the CIG 1420 including the CISs 1421 and 1425) through the communication link (e.g., the first ACL 251) between the electronic device 101 and the external electronic device 201. In an embodiment, the electronic device 101 may transmit the transmission parameter for the CIG 1420 including the CISs 1421 and 1425 to the external electronic device 201 through the first ACL 251. In an embodiment, the external electronic device 201 may transmit, to the external electronic device 202 through the communication link 240, a transmission parameter for the left CIS 1425 for data to be output from the left channel among the CISs 1421 and 1425. In an embodiment, the external electronic device 202 may obtain a packet transmitted from the electronic device 101 through the left CIS 1425. In an embodiment, the external electronic device 202 may transmit, to the electronic device 101 through the left CIS 1425, a response for the packet transmitted from the electronic device 101 through the left CIS 1425.

For example, referring to FIG. 14C, the electronic device 101 may generate a CIG 1430 including a CIS 1431 (or set a transmission parameter for the CIG 1430 including the CIS 1431) through the communication link (e.g., the first ACL 251) between the electronic device 101 and the external electronic device 201. In an embodiment, the electronic device 101 may transmit, to the external electronic device 201 through the first ACL 251, the transmission parameter for the CIG 1430 including the CIS 1431. In an embodiment, the external electronic device 201 may transmit, to the external electronic device 202 through the communication link 240, the transmission parameter for the CIS 1431, based on the CIS 1431 being a CIS for common data. In an embodiment, the external electronic device 202 may obtain a packet transmitted from the electronic device 101 through the CIS 1431. In an embodiment, the external electronic device 202 may transmit, to the external electronic device 201 through the communication link 240, a response for the packet transmitted from the electronic device 101 through the CIS 1431. The external electronic device 201 may transmit, to the electronic device 101 through the CIS 1431, the response for the packet transmitted from the electronic device 101 through the CIS 1431, based on whether the packet is received through the CIS 1431 and a response (e.g., ACK or NACK) from the external electronic device 202.

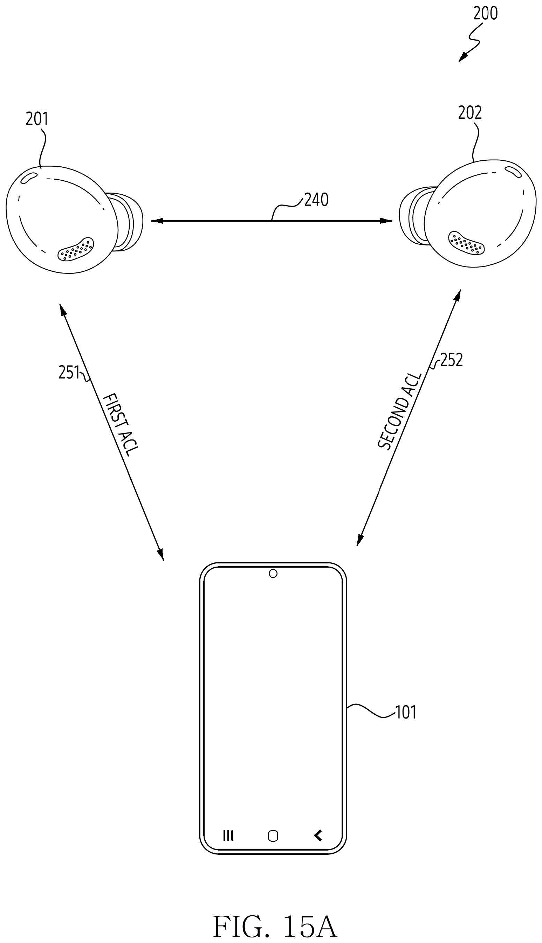

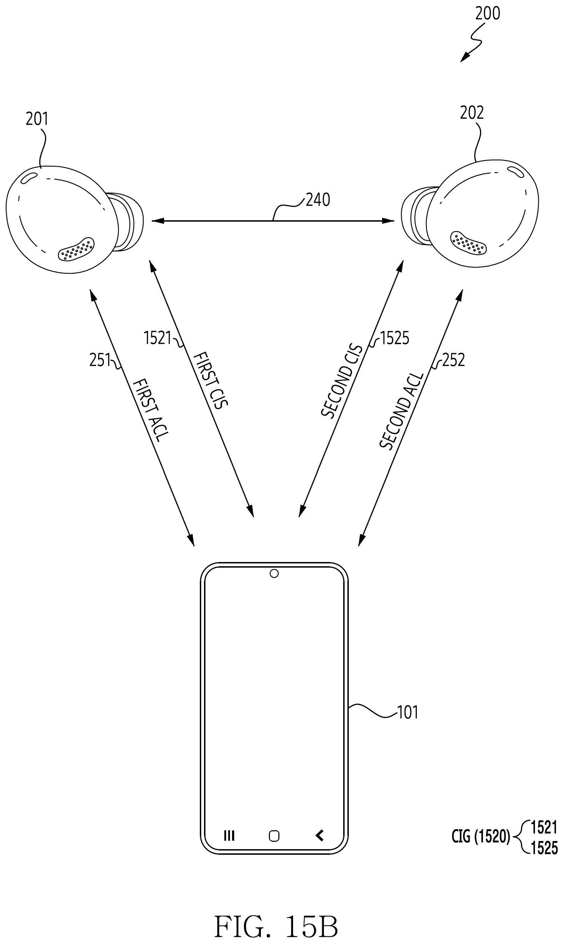

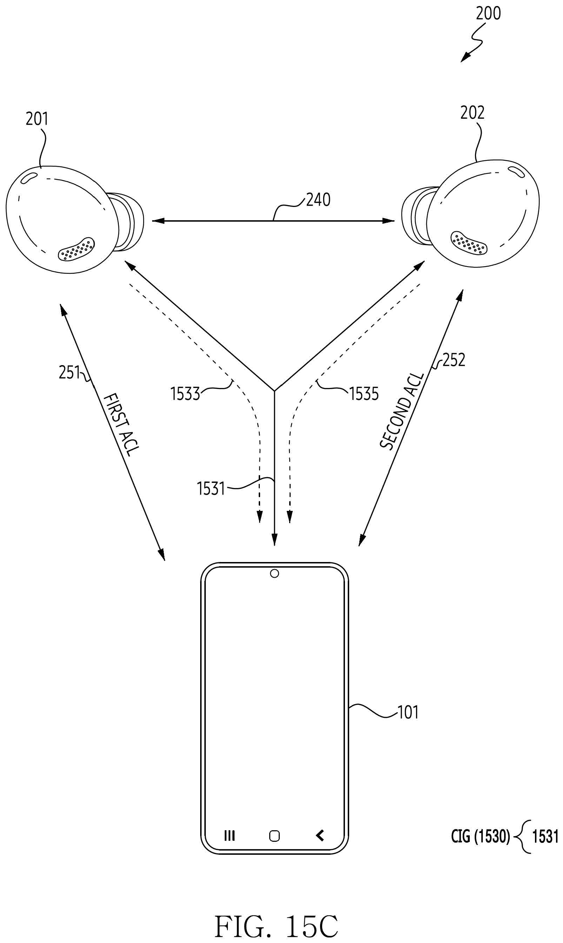

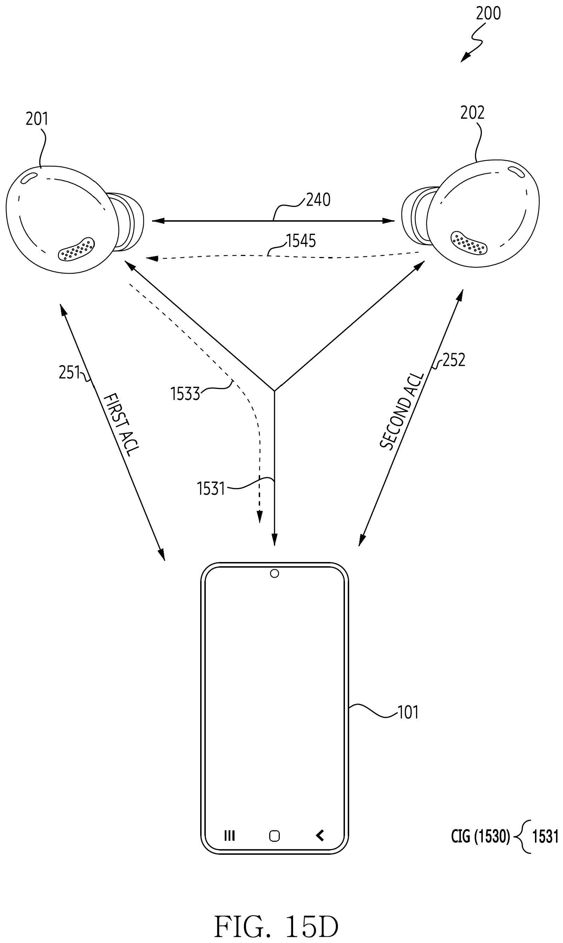

FIG. 15A illustrates an example of a wireless environment including an electronic device and an external electronic device. FIG. 15B illustrates an example of a wireless environment including an electronic device and an external electronic device. FIG. 15C illustrates an example of a wireless environment including an electronic device and an external electronic device. FIG. 15D illustrates an example of a wireless environment including an electronic device and an external electronic device.

Referring to FIGS. 15A, 15B, 15C, and 15D, the wireless environment may include an electronic device 101, an external electronic device 201, and an external electronic device 202.

The wireless environment of FIG. 15A may be a state in which a communication link (e.g., a first ACL 251) between the electronic device 101 and the external electronic device 201, a communication link (e.g., a second ACL 252) between the electronic device 101 and the external electronic device 202, and a communication link 240 between the external electronic device 201 and the external electronic device 202 are established. In an embodiment, the communication link 240 between the external electronic device 201 and the external electronic device 202 may be an ACL.

In an embodiment, the electronic device 101 may generate one or more CISs (or transmit a transmission parameter for the one or more CISs). In an embodiment, the electronic device 101 may generate (or set) one or more CISs (or a transmission parameter for the one or more CISs) for transmitting packets for an audio service to the external electronic device 201 and/or the external electronic device 202. In an embodiment, the one or more CISs may be included in a CIG. However, it is not limited thereto.

In an embodiment, the electronic device 101 may transmit one or more CISs (or a transmission parameter for the one or more CISs) for transmitting packets for the audio service through the communication link (e.g., the first ACL 251) between the electronic device 101 and the external electronic device 201. In an embodiment, the electronic device 101 may transmit one or more CISs (or a transmission parameter for the one or more CISs) related to the external electronic device 201 through the communication link (e.g., the first ACL 251) between the electronic device 101 and the external electronic device 201. For example, a transmission parameter for at least one CIS, among one or more CISs, for transmitting a packet for the external electronic device 201 (e.g., common data of audio for providing stereophonic sound and/or right residual data to be output from a right channel of the audio) may be transmitted to the external electronic device 201 through the first ACL 251.

In an embodiment, the electronic device 101 may transmit one or more CISs (or a transmission parameter for the one or more CISs) for transmitting packets for the audio service through the communication link (e.g., the second ACL 252) between the electronic device 101 and the external electronic device 202. In an embodiment, the electronic device 101 may transmit one or more CISs (or a transmission parameter for the one or more CISs) related to the external electronic device 202 through the communication link (e.g., the second ACL 252) between the electronic device 101 and the external electronic device 202. For example, a transmission parameter for at least one CIS, among one or more CISs, for transmitting a packet for the external electronic device 202 (e.g., common data of audio for providing stereophonic sound and/or left residual data to be output from a left channel of the audio) may be transmitted to the external electronic device 202 through the second ACL 252.

For example, referring to FIG. 15B, a first CIS 1521 may be a CIS for right residual data to be output from a right channel of audio, and a second CIS 1525 may be a CIS for left residual data to be output from a left channel of audio. For example, the electronic device 101 may transmit, to the external electronic device 201 through the first ACL 251 between the electronic device 101 and the external electronic device 201, a transmission parameter for the first CIS 1521 related to the external electronic device 201 among the CISs 1521 and 1525 included in a CIG 1520. For example, the electronic device 101 may transmit, to the external electronic device 202 through the second ACL 252 between the electronic device 101 and the external electronic device 202, a transmission parameter for the second CIS 1525 related to the external electronic device 202 among the CISs 1521 and 1525 included in the CIG 1520.

For example, referring to FIGS. 15C and 15D, a CIS 1531 may be a CIS for common data of audio to provide stereophonic sound. For example, the electronic device 101 may transmit, to the external electronic device 201 through the first ACL 251 between the electronic device 101 and the external electronic device 201, a transmission parameter for the CIS 1531 included in a CIG 1530. For example, the electronic device 101 may transmit, to the external electronic device 202 through the second ACL 252 between the electronic device 101 and the external electronic device 202, a transmission parameter for the CIS 1531 included in the CIG 1530.

In an embodiment, the electronic device 101 may instruct, through the second ACL 252, the external electronic device 202 on a response method for data transmitted through the CIS 1531.

For example, the electronic device 101 may request, from the external electronic device 202, a response for a packet transmitted through the CIS 1531. For example, the electronic device 101 may request responses from the external electronic device 201 and the external electronic device 202 to transmit responses for a packet at different times through the CIS 1531. For example, referring to FIG. 15C, the external electronic device 201 may transmit a response 1533 to the electronic device 101 at designated first time through the CIS 1531, and the external electronic device 202 may transmit a response 1535 to the electronic device 101 at designated second time through the CIS 1531. The designated first time and second time may not overlap each other.

For example, the electronic device 101 may not request, from the external electronic device 202, a response for a packet transmitted through the CIS 1531. For example, the electronic device 101 may request the external electronic device 201 to transmit a response for a packet through the CIS 1531, and may request the external electronic device 202 not to transmit a response through the CIS 1531. For example, referring to FIG. 15D, the external electronic device 202 may transmit a response 1545 to the external electronic device 201 at designated first time through the communication link 240. The external electronic device 201 may transmit a response 1533 to the electronic device 101 at designated second time through the CIS 1531. In an embodiment, the response 1533 may be determined based on contents of the response 1545 and whether the external electronic device 201 receives packets through the CIS 1531. For example, in a case that the response 1545 is NACK, the response 1533 may be NACK. For example, in a case that the response 1545 is ACK, but the external electronic device 201 does not receive a packet, the response 1533 may be NACK. For example, in a case that the response 1545 is ACK and the external electronic device 201 receives a packet, the response 1533 may be ACK. The designated first time and second time may not overlap each other. In an embodiment, the designated first time may precede the second time.

As described above, an electronic device 101 may operate as a central device in a wireless environment. The electronic device 101 may comprise communication circuitry 390 for Bluetooth low energy (BLE). The electronic device 101 may comprise a processor 120. The electronic device 101 may comprise memory 130 storing instructions. The instructions, when executed the processor 120, may cause the electronic device 101 to generate a plurality of connected isochronous groups (CIGs) 210, 220, and 230 for an external electronic device 201, which operates as a peripheral device, through the communication circuitry 390. The plurality of CIGs 210, 220, and 230 may be generated by different transmission parameters for transmitting packets for outputting audio to the external electronic device 201. The instructions, when executed the processor 120, may cause the electronic device 101 to transmit the packets for outputting the audio to the external electronic device 201 through the plurality of CIGs 210, 220, and 230.

As described above, an electronic device 101 may operate as a central device in a wireless environment. The electronic device 101 may comprise communication circuitry 390 for Bluetooth low energy (BLE). The electronic device 101 may comprise a processor 120. The electronic device 101 may comprise memory 130 storing instructions. The instructions, when executed the processor 120, may cause the electronic device 101 to generate a first CIG event 511 and a second CIG event 512 to be used to output audio using an external electronic device 201, which operates as a peripheral device in the wireless environment. The instructions, when executed the processor 120, may cause the electronic device 101 to transmit a first packet according to a first transmission parameter, which is set for the first CIG event 511 using the communication circuitry 390, to the external electronic device 201 through a CIS event in the first CIG event 511. The instructions, when executed the processor 120, may cause the electronic device 101 to transmit a second packet according to a second transmission parameter, which is set for the second CIG event 512 using the communication circuitry 390, different from the first transmission parameter, to the external electronic device 201 through a CIS event in the second CIG event 512.

The instructions, when executed the processor 120, may cause the electronic device 101 to transmit the first packet including mandatory data for outputting the audio to the external electronic device 201 through the CIS event in the first CIG event 511. The instructions, when executed the processor 120, may cause the electronic device 101 to transmit the second packet including optional data for outputting the audio to the external electronic device 201 through the CIS event in the second CIG event 512.

The instructions, when executed the processor 120, may cause the electronic device 101 to, based on that at least partial time among time occupied by an isochronous (ISO) interval for the first CIG event 511 overlaps time occupied by an ISO interval for the second CIG event 512, transmit, for the at least partial time, the first packet to the external electronic device 201 through the CIS event in the first CIG event 511 other than the second CIG event 512.

The instructions, when executed the processor 120, may cause the electronic device 101 to, in response to a lapse of usable time for one or more retransmissions of the first packet through the first CIG event 511, transmit the first packet to the external electronic device 201 through the CIS event in the first CIG event 511, during at least partial time among time occupied by an isochronous (ISO) interval for the second CIG event 512.

The instructions, when executed the processor 120, may cause the electronic device 101 to, using the communication circuitry 390, transmit a signal representing that the first packet is transmitted to another external electronic device 201 different from the external electronic device 201, through the CIS event in the first CIG event 511. The instructions, when executed the processor 120, may cause the electronic device 101 to transmit the first packet to the external electronic device 201 and the another external electronic device 202 through the CIS event in the first CIG event 511.

The instructions, when executed the processor 120, may cause the electronic device 101 to generate a signal representing that the first packet is transmitted through the CIS event in the first CIG event 511 delivered to another external electronic device 202 different from the external electronic device 201. The instructions, when executed the processor 120, may cause the electronic device 101 to transmit the first packet to the external electronic device 201 and the another external electronic device 202 through the CIS event in the first CIG event 511.

The instructions, when executed the processor 120, may cause the electronic device 101 to receive a response to the first packet from the external electronic device 201 between the external electronic device 201 and the another external electronic device 202, using the communication circuitry 390.

The instructions, when executed the processor 120, may cause the electronic device 101 to receive, a response to the first packet from the external electronic device 201 and the another external electronic device 202, respectively, through the CIS event in the first CIG event 511, using the communication circuitry 390.

The second CIG event 512 may include a first CIS event for transmitting the second packet to the external electronic device 201 and a second CIS event for transmitting a third packet including other optional data for outputting the audio to another external electronic device 202 different from the external electronic device 201.

A bit rate of the first CIG event 511 may be higher than a bit rate of the second CIG event 512.

The instructions, when executed the processor 120, may cause the electronic device 101 to discard packets to be transmitted through the CIS event in the second CIG event 512 during time, based on that the communication circuitry 390 operates for transmitting different packets of different data during the time by an isochronous (ISO) interval for the second CIG event 512.

The instructions, when executed the processor 120, may cause the electronic device 101 to generate service data units (SDUs) by encoding the audio according to a designated coding technique. The instructions, when executed the processor 120, may cause the electronic device 101 to generate the first packet to be transmitted through the CIS event in the first CIG event 511 using a first type of SDU among the SDUs. The instructions, when executed the processor 120, may cause the electronic device 101 to generate the second packet to be transmitted through the CIS event in the second CIG event 512 using a second type of SDU among the SDUs.

The instructions, when executed the processor 120, may cause the electronic device 101 to transmit a message notifying a generation of the first CIG event 511 and the second CIG event 512 to the external electronic device 201 through the communication circuitry 390.

The instructions, when executed the processor 120, may cause the electronic device 101 to determine a first CIG_Sync_Delay of the first transmission parameter, and a second CIG_Sync_Delay of the second transmission parameter such that first playback time of a first service data unit (SDU) included in the first packet corresponds to second playback time of a second SDU included in the second packet.

Each of the first packet and the second packet may include information related to playback time of the audio. The first packet and the second packet may include information related to playback time of the audio.

As described above, an electronic device 101 may operate as a central device in a wireless environment. The electronic device 101 may comprise communication circuitry 390 for Bluetooth low energy (BLE). The electronic device 101 may comprise a processor 120. The electronic device 101 may comprise memory 130 storing instructions. The instructions, when executed the processor 120, may cause the electronic device 101 to generate a CIG event 1210 to be used to output audio using an external electronic device 201, which operates as a peripheral device in the wireless environment. The instructions, when executed the processor 120, may cause the electronic device 101 to transmit a first packet according to a first transmission parameter, which is set for a first CIS event 1209 in the CIG event 1210 using the communication circuitry 390, to the external electronic device 201 through the first CIS event 1209. The instructions, when executed the processor 120, may cause the electronic device 101 to transmit a second packet according to a second transmission parameter, which is set for a second CIS event 1204 in the CIG event 1210 using the communication circuitry 390, different from the first transmission parameter, to the external electronic device 201 through the second CIS event 1204.

The instructions, when executed the processor 120, may cause the electronic device 101 to transmit the first packet including mandatory data for outputting the audio to the external electronic device 201 through the first CIS event 1209. The instructions, when executed the processor 120, may cause the electronic device 101 to transmit the second packet including optional data for outputting the audio to the external electronic device 201 through the second CIS event 1204.

As described above, an electronic device 201 may operate as a peripheral device in a wireless environment. The external electronic device 201 may comprise a speaker 351. The external electronic device 201 may comprise communication circuitry 391 for Bluetooth low energy (BLE). The external electronic device 201 may comprise a processor 321. The external electronic device 201 may comprise memory 331 storing instructions. The instructions, when executed the processor 321, may cause the electronic device 201 to receive a first packet according to a first transmission parameter, which is set for a first CIG event 511 using the communication circuitry 391, from an external electronic device 101, which operates as a central device, through a CIS event in the first CIG event 511. The instructions, when executed the processor 321, may cause the electronic device 201 to receive a second packet according to a second transmission parameter, which is set for a second CIG event 512 using the communication circuitry 391, different from the first transmission parameter, from the external electronic device 101 through a CIS event in the second CIG event 512. The instructions, when executed the processor 321, may cause the electronic device 201 to output the audio obtained using the first packet and the second packet through the speaker 351.

The instructions, when executed the processor 321, may cause the electronic device 201 to receive the first packet including mandatory data for outputting the audio from the external electronic device 101 through the CIS event in the first CIG event 511. The instructions, when executed the processor 321, may cause the electronic device 201 to receive the second packet including optional data for outputting the audio from the external electronic device 101 through the CIS event in the second CIG event 512.

The instructions, when executed the processor 321, may cause the electronic device 201 to obtain a response indicating whether the first packet is received from another external electronic device 202, which operates as the peripheral device for the external electronic device 101, through the communication circuitry 391. The instructions, when executed the processor 321, may cause the electronic device 201 to, based on whether the first packet is received by the electronic device 201 and the response, transmit a final response indicating whether the first packet is received to the external electronic device 101.

The instructions, when executed the processor 321, may cause the electronic device 201 to obtain the audio by decoding the first packet and the second packet according to a designated coding technique.

The instructions, when executed the processor 321, may cause the electronic device 201 to identify information related to playback time of the audio included in the packets. The instructions, when executed the processor 321, may cause the electronic device 201 to identify the first packet and the second packet of which the playback time corresponds to each other among a plurality of first packets and a plurality of second packets. The instructions, when executed the processor 321, may cause the electronic device 201 to obtain the audio to be played at the playback time by decoding the identified first packet and the identified second packet according to the designated coding technique.

The information related to the playback time of the audio may include a sequence number of a service data unit (SDU) included in a packet.

As described above, a method may be performed by an electronic device 101 that operates as a central device in a wireless environment and includes communication circuitry 390 for Bluetooth low energy (BLE). The method may comprise generating a plurality of connected isochronous groups (CIGs) 210, 220, and 230 for an external electronic device 201, which operates as a peripheral device, through the communication circuitry 390. The plurality of CIGs 210, 220, and 230 may be generated by different transmission parameters for transmitting packets for outputting audio to the external electronic device 201. The method may comprise transmitting the packets for outputting the audio to the external electronic device 201 through the plurality of CIGs 210, 220, and 230.

As described above, a method may be performed by an electronic device 101 that operates as a central device in a wireless environment and includes communication circuitry 390 for Bluetooth low energy (BLE). The method may comprise generating a first CIG event 511 and a second CIG event 512 to be used to output audio using an external electronic device 201, which operates as a peripheral device in the wireless environment. The method may comprise transmitting a first packet according to a first transmission parameter, which is set for the first CIG event 511 using the communication circuitry 390, to the external electronic device 201 through a CIS event in the first CIG event 511. The method may comprise transmitting a second packet according to a second transmission parameter, which is set for the second CIG event 512 using the communication circuitry 390, different from the first transmission parameter, to the external electronic device 201 through a CIS event in the second CIG event 512.

As described above, a method may be performed by an electronic device 101 that operates as a central device in a wireless environment and includes communication circuitry 390 for Bluetooth low energy (BLE). The method may comprise generating a CIG event 1210 to be used to output audio using an external electronic device 201, which operates as a peripheral device in the wireless environment. The method may comprise transmitting a first packet according to a first transmission parameter, which is set for a first CIS event 1209 in the CIG event 1210 using the communication circuitry 390, to the external electronic device 201 through the first CIS event 1209. The method may comprise transmitting a second packet according to a second transmission parameter, which is set for a second CIS event 1204 in the CIG event 1210 using the communication circuitry 390, different from the first transmission parameter, to the external electronic device 201 through the second CIS event 1204.

As described above, a method may be performed by an electronic device 201 that operates as a peripheral device in a wireless environment and includes communication circuitry 391 for Bluetooth low energy (BLE). The method may comprise receiving a first packet according to a first transmission parameter, which is set for a first CIG event 511 using the communication circuitry 391, from an external electronic device 101, which operates as a central device, through a CIS event in the first CIG event 511. The method may comprise receiving a second packet according to a second transmission parameter, which is set for a second CIG event 512 using the communication circuitry 391, different from the first transmission parameter, from the external electronic device 101 through a CIS event in the second CIG event 512. The method may comprise outputting the audio obtained using the first packet and the second packet through the speaker 351.

As described above, a non-transitory computer readable storage medium may store a program including instructions. The instructions, when executed a processor 120 of an electronic device 101, which operates as a central device in a wireless environment and includes communication circuitry 390 for Bluetooth low energy (BLE), may cause the electronic device to generate a plurality of CIGs 210, 220, and 230 for an external electronic device 201, which operates as a peripheral device, through the communication circuitry 390. The plurality of CIGs 210, 220, and 230 may be generated by different transmission parameters for transmitting packets for outputting audio to the external electronic device 201. The instructions, when executed the processor 120, may cause the electronic device 101 to transmit the packets for outputting the audio to the external electronic device 201 through the plurality of CIGs 210, 220, and 230.

As described above, a non-transitory computer readable storage medium may store a program including instructions. The instructions, when executed a processor 120 of an electronic device 101, which operates as a central device in a wireless environment and includes communication circuitry 390 for Bluetooth low energy (BLE), may cause the electronic device to generate a first CIG event 511 and a second CIG event 512 to be used to output audio using an external electronic device 201, which operates as a peripheral device in the wireless environment. The instructions, when executed the processor 120, may cause the electronic device 101 to transmit a first packet according to a first transmission parameter, which is set for the first CIG event 511 using the communication circuitry 390, to the external electronic device 201 through a CIS event in the first CIG event 511. The instructions, when executed the processor 120, may cause the electronic device 101 to transmit a second packet according to a second transmission parameter, which is set for the second CIG event 512 using the communication circuitry 390, different from the first transmission parameter, to the external electronic device 201 through a CIS event in the second CIG event 512.

As described above, a non-transitory computer readable storage medium may store a program including instructions. The instructions, when executed a processor 120 of an electronic device 101, which operates as a central device in a wireless environment and includes communication circuitry 390 for Bluetooth low energy (BLE), may cause the electronic device to generate a CIG event 1210 to be used to output audio using an external electronic device 201, which operates as a peripheral device in the wireless environment. The instructions, when executed the processor 120, may cause the electronic device 101 to transmit a first packet according to a first transmission parameter, which is set for a first CIS event 1209 in the CIG event 1210 using the communication circuitry 390, to the external electronic device 201 through the first CIS event 1209. The instructions, when executed the processor 120, may cause the electronic device 101 to transmit a second packet according to a second transmission parameter, which is set for a second CIS event 1204 in the CIG event 1210 using the communication circuitry 390, different from the first transmission parameter, to the external electronic device 201 through the second CIS event 1204.

As described above, a non-transitory computer readable storage medium may store a program including instructions. The instructions, when executed a processor 321 of an electronic device 201, which operates as a peripheral device in a wireless environment and includes communication circuitry 391 for Bluetooth low energy (BLE), may cause the electronic device to receive a first packet according to a first transmission parameter, which is set for a first CIG event 511 using the communication circuitry 391, from an external electronic device 101, which operates as a central device, through a CIS event in the first CIG event 511. The instructions, when executed the processor 321, may cause the electronic device 201 to receive a second packet according to a second transmission parameter, which is set for a second CIG event 512 using the communication circuitry 391, different from the first transmission parameter, from the external electronic device 101 through a CIS event in the second CIG event 512. The instructions, when executed the processor 321, may cause the electronic device 201 to output the audio obtained using the first packet and the second packet through the speaker 351.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
communication circuitry (390) for Bluetooth low energy (BLE),
at least one processor (120) including processing circuitry, and
memory (130) comprising one or more storage media storing instructions, wherein the instructions, when executed the at least one processor (120) individually or collectively, cause the electronic device (101) to:
generate a first connected isochronous group (CIG) event (511) and a second CIG event (512) to be used to output audio using an external electronic device (201),
transmit a first packet according to a first transmission parameter, which is set for the first CIG event (511) using the communication circuitry (390), to the external electronic device (201) through a connected isochronous stream (CIS) event in the first CIG event (511), and
transmit a second packet according to a second transmission parameter, which is set for the second CIG event (512) using the communication circuitry (390), different from the first transmission parameter, to the external electronic device (201) through a CIS event in the second CIG event (512).

2. The electronic device (101) of claim 1,
wherein the instructions, when executed the at least one processor (120) individually or collectively, cause the electronic device (101) to:
transmit the first packet including mandatory data for outputting the audio to the external electronic device (201) through the CIS event in the first CIG event (511), and
transmit the second packet including optional data for outputting the audio to the external electronic device (201) through the CIS event in the second CIG event (512).

3. The electronic device (101) of claim 2,
wherein the instructions, when executed the at least one processor (120) individually or collectively, cause the electronic device (101) to:
generate a signal representing that the first packet is transmitted through the CIS event in the first CIG event (511) delivered to another external electronic device (202) different from the external electronic device (201), and
transmit the first packet to the external electronic device (201) and the another external electronic device (202) through the CIS event in the first CIG event (511).

4. The electronic device (101) of claim 3,
wherein the instructions, when executed the at least one processor (120) individually or collectively, cause the electronic device (101) to:
receive a response to the first packet only from the external electronic device (201) between the external electronic device (201) and the another external electronic device (202), using the communication circuitry (390).

5. The electronic device (101) of claim 3,
wherein the instructions, when executed the at least one processor (120) individually or collectively, cause the electronic device (101) to:
receive, a response to the first packet from the external electronic device (201) and the another external electronic device (202), respectively, through the CIS event in the first CIG event (511), using the communication circuitry (390).

6. The electronic device (101) of claim 2,
wherein the second CIG event (512) includes a first CIS event for transmitting the second packet to the external electronic device (201) and a second CIS event for transmitting a third packet including other optional data for outputting the audio to another external electronic device (202) different from the external electronic device (201).

7. The electronic device (101) of claim 2,
wherein a bit rate of the first CIG event (511) is higher than a bit rate of the second CIG event (512).

8. The electronic device (101) of any one of claim 1 to claim 7,
wherein the instructions, when executed the at least one processor (120) individually or collectively, cause the electronic device (101) to:
discard packets to be transmitted through the CIS event in the second CIG event (512) during time, based on that the communication circuitry (390) operates for transmitting different packets of different data during the time by an isochronous (ISO) interval for the second CIG event (512).

9. The electronic device (101) of any one of claim 1 to claim 8,
wherein the instructions, when executed the at least one processor (120) individually or collectively, cause the electronic device (101) to:
generate service data units (SDUs) by encoding the audio according to a designated coding technique,
generate the first packet to be transmitted through the CIS event in the first CIG event (511) using a first type of SDU among the SDUs,
generate the second packet to be transmitted through the CIS event in the second CIG event (512) using a second type of SDU among the SDUs.

10. The electronic device (101) of any one of claim 1 to claim 9,
wherein the instructions, when executed the at least one processor (120) individually or collectively, cause the electronic device (101) to:
transmit a message notifying a generation of the first CIG event (511) and the second CIG event (512) to the external electronic device (201) through the communication circuitry (390).

11. The electronic device (101) of any one of claim 1 to claim 10,
wherein the instructions, when executed the at least one processor (120) individually or collectively, cause the electronic device (101) to:
determine a first CIG_Sync_Delay of the first transmission parameter, and a second CIG_Sync_Delay of the second transmission parameter such that first playback time of a first service data unit (SDU) included in the first packet corresponds to second playback time of a second SDU included in the second packet.

12. The electronic device (101) of any one of claim 1 to claim 11,
wherein the first packet and the second packet include information related to playback time of the audio.

13. An electronic device (101), comprising:
communication circuitry (390) for Bluetooth low energy (BLE),
at least one processor (120) including processing circuitry, and
memory (130) comprising one or more storage media storing instructions, wherein the instructions, when executed the at least one processor (120) individually or collectively, cause the electronic device (101) to:
generate a connected isochronous group (CIG) event (1210) to be used to output audio using an external electronic device (201),
transmit a first packet according to a first transmission parameter, which is set for a first connected isochronous stream (CIS) event in the CIG event using the communication circuitry (390), to the external electronic device (201) through the first CIS event (1209), and
transmit a second packet according to a second transmission parameter, which is set for a second CIS event (1204) in the CIG event using the communication circuitry (390), different from the first transmission parameter, to the external electronic device (201) through the second CIS event (1204).

14. The electronic device (101) of claim 13,
wherein the instructions, when executed the at least one processor (120) individually or collectively, cause the electronic device (101) to:
transmit the first packet including mandatory data for outputting the audio to the external electronic device (201) through the first CIS event (1209), and
transmit the second packet including optional data for outputting the audio to the external electronic device (201) through the second CIS event (1204).

15. A method of an electronic device (101), comprising:
generating a first connected isochronous group (CIG) event (511) and a second CIG event (512) to be used to output audio using an external electronic device (201),
transmitting a first packet according to a first transmission parameter, which is set for the first CIG event (511) using communication circuitry (390), to the external electronic device (201) through a connected isochronous stream (CIS) event in the first CIG event (511), and
transmitting a second packet according to a second transmission parameter, which is set for the second CIG event (512) using the communication circuitry (390), different from the first transmission parameter to the external electronic device (201) through a CIS event in the second CIG event (512).
